# EUROPÄISCHE PATENTSCHRIFT

(11) **EP 4 519 635 B1**
(45) Veröffentlichungstag und Bekanntmachung des Hinweises auf die Patenterteilung: **20.08.2025**
(21) Anmeldenummer: 23724754.9
(22) Anmeldetag: 03.05.2023
(51) Int. Cl.: G01F 1/66, G01F 1/667, G01F 15/00, G01F 15/18, F15D 1/00, F15D 1/02

(54) **VORRICHTUNG ZUM ANORDNEN AN EINER FLUIDFÜHRENDEN LEITUNG UND ZUM ANBRINGEN EINER DURCHFLUSSMESSEINRICHTUNG, UND VERFAHREN ZUR ERFASSUNG EINER MESSGRÖSSE DES VON EINER LEITUNG GEFÜHRTEN FLUIDS**
DEVICE FOR ARRANGING ON A FLUID-CARRYING LINE AND FOR APPLYING A FLOW MEASURING DEVICE, AND METHOD FOR DETECTING A MEASUREMENT VARIABLE OF THE FLUID GUIDED BY A CONDUIT
APPAREIL D'AGENCEMENT SUR UNE CONDUITE GUIDANT UN LIQUIDE ET D'APPLICATION D'UN DISPOSITIF À ÉCOULEMENT CONTINU ET PROCÉDÉ DE DÉTECTION D'UNE GRANDEUR À MESURER D'UN FLUIDE ACHEMINÉ DANS UNE CONDUITE

(30) Priorität: 04.05.2022 EP 22171520
(43) Veröffentlichungstag der Anmeldung: 12.03.2025
(73) Patentinhaber: Sartorius Stedim Biotech GmbH, 37079 Göttingen (DE); Levitronix GmbH, 8048 Zürich (CH)
(72) Erfinder: BODE, Matthias, 37434 Krebeck-Renshausen (DE); AUE, Norbert, 37120 Bovenden (DE); HOFFMANN, Edgar, 86928 Hofstetten (DE); BOBER, Maciej, 86929 Penzing (DE)
(74) Vertreter: Novagraaf International SA
(86) Internationale Anmeldenummer: PCT/EP2023/061699
(87) Internationale Veröffentlichungsnummer: WO 2023/213896

(56) Entgegenhaltungen:
- EP-A1- 1 876 427
- WO-A1-2013/129246
- DE-A1- 102011 112 028
- DE-A1- 102013 015 069
- DE-A1- 102018 009 569
- US-A1- 2012 318 069
- US-B2- 8 443 842

## Beschreibung

Die vorliegende Erfindung betrifft eine Vorrichtung zum Anordnen an einer fluidführenden Leitung und zum Anbringen einer Durchflussmesseinrichtung sowie ein Verfahren zur Erfassung einer Messgröße des von einer Leitung geführten Fluids.

Bei einer Vielzahl von Verfahren in der Automation industrieller oder labortechnischer Prozesse werden Durchflussmessungen in Leitungs-, Rohr- und Schlauchsystemen zur Kontrolle der Prozesse durchgeführt. Für Durchflussmessungen kommen dabei unter anderem In-Line-Durchflussmessvorrichtungen und Clamp-On-Durchflussmessvorrichtungen zum Einsatz. Bei In-Line- Durchflussmessvorrichtungen werden Messsensoren im Strömungsprofil des zu messenden Fluids bzw. Mediums angebracht, wohingegen Clamp-On-Durchflussmessvorrichtungen von außen auf eine Leitung, ein Rohr oder einen Schlauch, welche das Fluid bzw. Medium führen, aufgesetzt und festgeklemmt werden.

Ferner sind Clamp-On-Durchflussmessvorrichtungen bekannt, bei denen eine Vorrichtung in einem das Fluid bzw. Medium führenden Kunststoffschlauch eingebaut wird, so dass das Fluid bzw. Medium die Vorrichtung durchströmt. An diese Vorrichtung wird eine Durchflussmessvorrichtung befestigt, die ein geeignetes Eingabesignal, bspw. ein Ultraschallsignal, in die in dem Kunststoffschlauch eingebaute Vorrichtung eingibt und anhand eines über die Vorrichtung erhaltenen Ausgabesignals die Durchflussmessung durchführt.

Des Weiteren betrifft die WO 2013/129246 A1 ein Element zur Einstellung der Strömungsgeschwindigkeitsverteilung, welches an einem Kanal auf der stromaufwärtigen Seite eines Messrohrs angebracht ist.

Die EP 1 876 427 A1 betrifft einen Durchflussmesser für ein strömendes Medium. Der Durchflussmesser hat einen Einlaufbereich und eine sich anschließende Durchflussmessstrecke, die in einem Gehäuse angeordnet sind. In den Einlaufbereich ist eine Turbulatorkomponente zur Erzeugung einer Turbulenz in dem strömenden Medium integriert.

Die DE 10 2018 009569 A1 betrifft eine Messeinrichtung zur Ermittlung einer Fluidgröße mit einer Steuereinrichtung, einem Messrohr und einem ersten und einem zweiten voneinander beabstandet an dem Messrohr angeordneten Schwingungswandler.

Die DE 10 2011 112028 A1 betrifft einen Ultraschallzähler, umfassend ein Gehäuse mit einem rohrförmigen Strömungsabschnitt, in den ein eine Messstrecke definierender Messeinsatz eingesetzt ist, sowie zwei gehäuseseitig angeordnete Ultraschallwandler denen am Messeinsatz angeordnete Reflektoren zugeordnet sind.

Die US 8 443 842 B2 betrifft einen Strömungsrichter für ein Durchflussmessgerät.

Der vorliegenden Erfindung liegt die Aufgabe zugrunde eine Vorrichtung zum Anordnen an einer fluidführenden Leitung und zum Anbringen einer Durchflussmesseinrichtung bereitzustellen, die es ermöglicht, die Genauigkeit einer Durchflussmessung zu verbessern. Ferner ist es Aufgabe der Erfindung ein Verfahren zur Erfassung einer Messgröße des von einer Leitung geführten Fluids vorzuschlagen, welches eine möglichst genaue Erfassung der Messgröße ermöglicht.

Diese Aufgabe wird durch die Gegenstände der unabhängigen Ansprüche gelöst. Bevorzugte Ausführungsformen sind in den abhängigen Ansprüchen gelöst.

Ein erster Aspekt betrifft eine Vorrichtung zum Anordnen an einer fluidführenden Leitung und zum Anbringen einer Durchflussmesseinrichtung, insbesondere einer Ultraschall-Durchflussmesseinrichtung, zur Erfassung einer Messgröße des von der Leitung geführten Fluids, wobei die Vorrichtung aufweist:
- einen ersten und einen zweiten Anschluss, mittels derer die Vorrichtung mit der fluidführenden Leitung verbindbar ist,
- einen zwischen dem ersten Anschluss und dem zweiten Anschluss angeordneten Messbereich, der mit der Durchflussmesseinrichtung zum Erfassen der Messgröße koppelbar ist, wobei der erste Anschluss, der Messbereich und der zweite Anschluss eine Durchflussstrecke für das Fluid durch die Vorrichtung festlegen,
- ein in und/oder an der Durchflussstrecke angeordnetes strömungsbeeinflussendes Element, welches in einer vorgesehenen Durchflussrichtung des Fluids entlang der Durchflussstrecke vor dem Messbereich angeordnet und von diesem beabstandet ist,
   wobei das strömungsbeeinflussende Element einstückig mit dem ersten Anschluss oder dem zweiten Anschluss ausgebildet ist, und
   wobei das strömungsbeeinflussende Element derart ausgebildet ist, dass das über den ersten Anschluss in die Vorrichtung einströmende Fluid, welches mit einer im Wesentlichen laminaren Strömung in die Vorrichtung einströmt, im Messbereich eine im Wesentlichen turbulente Strömung aufweist.

Vorteilhafterweise ermöglicht das Vorsehen des strömungsbeeinflussenden Elements, dass bereits bei einer niedrigen Strömungsgeschwindigkeit des Fluids und/oder bei einem niedrigen Volumenstrom des Fluids entlang der Durchflusstrecke die Messgenauigkeit der erfassten Messgröße verbessert wird. Vorzugsweise kann somit die Bandbreite der Strömungsgeschwindigkeit des Fluids und/oder die Bandbreite des Volumenstroms des Fluids, in der eine genauere Erfassung der Messgröße ermöglicht wird, vergrößert werden. Als Bandbreite kann dabei ein Bereich verstanden werden, der durch einen unteren Wert nach unten und einen oberen Wert nach oben begrenzt ist. So kann beispielsweise die Bandbreite der Strömungsgeschwindigkeiten durch einen unteren Strömungsgeschwindigkeitswert nach unten und durch einen oberen Strömungsgeschwindigkeitswert nach oben begrenzt sein. Ebenso kann die Bandbreite der Volumenströme durch einen unteren Volumenstromwert nach unten und durch einen oberen Volumenstromwert nach oben begrenzt sein. Insbesondere wurde erkannt, dass durch das Vorliegen einer im Wesentlichen turbulenten Strömung im Messbereich, anstatt einer laminaren Strömung, die Messgenauigkeit verbessert werden kann. Ohne sich explizit auf eine bestimmte Theorie festzulegen, wird davon ausgegangen, dass durch das Vorliegen einer turbulenten Strömung, einzelne Schichten des Fluids bzw. Mediums über den Querschnitt der Durchflussstrecke gesehen ähnliche Strömungsgeschwindigkeiten in Richtung der Durchflussrichtung aufweisen, wodurch eine Verbesserung der Messgenauigkeit erreicht wird. Mit anderen Worten, über den Querschnitt der Durchflusstrecke weist das Fluid bzw. Medium im Wesentlichen ähnliche bzw. gleichbleibende Strömungsgeschwindigkeiten auf. Dagegen nimmt bei einer laminaren Strömung die Strömungsgeschwindigkeit vom Zentrum des Querschnitts der Durchflussstrecke hin zum äußeren Bereich des Querschnitts der Durchflussstrecke ab, so dass ein entsprechendes Strömungsgeschwindigkeitsprofil über den Querschnitt im wesentlichen parabelförmig ist. Der Querschnitt der Durchflussstrecke kann insbesondere einem ebenen Schnitt durch die Vorrichtung im Winkel von 90° zur Längsachse bzw. (Haupt-)Durchflussrichtung des Fluids durch die Vorrichtung entsprechen und sich auf den von der Vorrichtung umschlossenen Bereich, insbesondere dem Innenquerschnitt der Vorrichtung, beziehen.

Zur Unterscheidung von laminarer und turbulenter Strömung kann insbesondere die Reynoldszahl herangezogen werden. Unter der Annahme einer idealisierten Rohrströmung wird angenommen, dass die kritische Reynoldszahl, bei der mit einem Wechsel von laminarer zu turbulenter Strömung zu rechnen ist, bei ungefähr 2300 liegt. Da die Reynoldszahl durch die Dichte des Fluids, der mittleren Strömungsgeschwindigkeit des Fluids relativ zur Vorrichtung, die charakteristische Länge der Vorrichtung bzw. der Durchflussstrecke und der dynamischen Viskosität des Fluids beeinflusst wird, ist die Lage und Größe des strömungsbeeinflussenden Elements an den Anwendungsfall, bspw. eine zu erwartende Viskosität des Fluids oder Strömungsgeschwindigkeiten des Fluids, anzupassen, wobei die Ermittlung entsprechender Lage- und Größenbeziehungen des strömungsbeeinflussenden Elements durch eine computergestützte Simulation erfolgen kann. Bevorzugt sind die Lage und Ausgestaltung des strömungsbeeinflussenden Elements derart, das vor dem Messbereich eine Reynoldszahl von mindestens 2300 erreicht wird.

Vorteilhafterweise ermöglicht die einstückige Ausbildung des strömungsbeeinflussenden Elements mit dem ersten oder zweiten Anschluss, dass das strömungsbeeinflussende Element in einem festgelegten Abstand in Bezug auf den Messbereich angeordnet ist. Überraschenderweise hat sich herausgestellt, dass eine festgelegte Positionierung des strömungsbeeinflussenden Elements in Bezug auf den Messbereich zu einer zuverlässigen Ausbildung eines geeigneten Strömungsprofils bzw. zu einer turbulenten Strömung im Messbereich führt, insbesondere über einen großen Bereich von Fließgeschwindigkeiten des Fluids und/oder großen Temperaturbereichen und/oder unterschiedlichen Viskositäten des Fluids. Insbesondere wurde erkannt, dass auch bei steigenden Fließgeschwindigkeiten des Fluids und bei unterschiedlichen Viskositäten, ein turbulentes Strömungsprofil in dem Messbereich vorliegt. Damit ermöglicht die Vorrichtung eine einfache Handhabung, da der Abstand des strömungsbeeinflussenden Elements in Bezug auf den Messbereich nicht eingestellt werden muss, bei gleichzeitiger Sicherstellung eines geeigneten Strömungsprofils in dem Messbereich. Unter "einstückig" wird dabei insbesondere verstanden, dass das strömungsbeeinflussende Element integral mit dem ersten oder zweiten Anschluss ausgebildet ist und/oder dass das strömungsbeeinflussende Element fest bzw. monolithisch mit dem ersten oder zweiten Anschluss verbunden ist. Ferner ermöglicht die einstückige Ausbildung eine einfache Kalibrierung der Durchflussmesseinrichtung.

Vorzugsweise kann die Vorrichtung für eine nutzbare Bandbreite von Strömungsgeschwindigkeiten und/oder eine nutzbare Bandbreite von Volumenströmen, bei denen die Messgröße erfasst wird, vorgesehen sein. Insbesondere kann vorgesehen sein, die Messgröße ausschließlich innerhalb der nutzbaren Bandbreite zu erfassen. Vorzugsweise ist das strömungsbeeinflussende Element derart ausgebildet, dass das Fluid ab einem Volumenstrom von ungefähr 10% bis 20% des oberen Werts der nutzbaren Bandbreite, bspw. ein maximaler Volumenstrom, der die nutzbare Bandbreite von Volumenströmen nach oben begrenzt, im Messbereich eine turbulente Strömung aufweist.

Vorzugsweise kann die nutzbare Bandbreite von Volumenströmen ungefähr > 0 ml/min bis 4000 ml/min, besonders bevorzugt von ungefähr > 0 ml/min bis 5000 ml/min betragen.

Vorzugsweise kann die Vorrichtung für Fluide mit einer (dynamischen) Viskosität von 0,6 mPa·s (cP) bis 4,2 mPa·s (cP), bevorzugt von 0,8 mPa·s (cP) bis 4,0 mPa·s (cP), verwendet werden.

Insbesondere können der erste und zweite Anschluss sowie der zwischen dem ersten und zweiten Anschluss angeordnete Messbereich einen Kanal bzw. Strömungskanal aufweisen, der die Durchflussstrecke definiert und durch welchen das Fluid bzw. Medium strömt. Als fluidführende Leitung, welche mit dem ersten und zweiten Anschluss verbindbar sind, können beispielhaft Rohre oder Schläuche vorgesehen sein, welche beispielsweise aus Kunststoff gefertigt sind. Beispielsweise kann zum Anbringen der Vorrichtung an der Leitung vorgesehen sein, die Leitung zu trennen, so dass ein erstes offenes Ende der Leitung mit dem ersten Anschluss verbunden wird und ein zweites offenes Ende der Leitung mit dem zweiten Anschluss verbunden wird, so dass die Vorrichtung das erste offene Ende und das zweite offene Ende der Leitung miteinander verbindet.

Vorzugsweise ist die Durchflussstrecke bzw. der Kanal länglich ausgebildet und verläuft im Wesentlichen geradlinig. Insbesondere kann vorgesehen sein, dass die Durchflusstrecke nicht gebogen oder gekrümmt ist, beispielsweise keinen 90°-Knick aufweist, so dass die Haupt-Durchflussrichtung des Fluids bzw. des Mediums durch die Vorrichtung im Wesentlichen gleichbleibend ist.

Das Fluid bzw. Medium kann insbesondere flüssig sein, wobei das Fluid bzw. Medium auch feste Bestandteile, wie Partikel oder Zellbestandteile, aufweisen kann. Allerdings ist die Erfindung nicht auf Fluide in flüssiger Form beschränkt.

Vorzugsweise ist das strömungsbeeinflussende Element derart ausgebildet, dass der Umwandlungspunkt von laminarer zu turbulenter Strömung in Durchflussrichtung gesehen vor dem Messbereich liegt. Vorteilhafterweise kann somit im gesamten Messbereich eine turbulente Strömung anliegen.

Vorzugsweise kann die Durchflussmesseinrichtung ein Eingabesignal, bspw. ein Ultraschallsignal, in den Messbereich einkoppeln und über den Messbereich ein auf dem Eingabesignal basierendes Ausgabesignal empfangen. Anhand des Eingabe- und Ausgabesignals kann die Durchflussmesseinrichtung eine für die Durchflussmessung, bspw. eine Volumendurchfluss- oder Massendurchfluss-Messung, relevante Messgröße erfassen. Die Durchflussmesseinrichtung kann insbesondere eine Clamp-On Durchflussmesseinrichtung sein.

Vorzugsweise können der erste und zweite Anschluss zumindest abschnittsweise entlang der Durchflussstrecke einen im Wesentlichen kreisförmigen (Innen-)Querschnitt aufweisen. Ferner kann der Messbereich zumindest abschnittsweise entlang der Durchflussstrecke einen im Wesentlichen rechteckigen, insbesondere quadratischen, (Innen-)Querschnitt oder bevorzugt einen hexagonalen (Innen-)Querschnitt aufweisen.

Vorzugsweise kann das strömungsbeeinflussende Element als eine Querschnittsverengung der Durchflussstrecke ausgebildet sein, wobei die Querschnittsfläche der Durchflussstrecke unmittelbar vor und nach dem strömungsbeeinflussenden Element größer ist als die (kleinste) Querschnittsfläche der Durchflussstrecke des strömungsbeeinflussenden Elements. Vorzugsweise kann die Querschnittsfläche der Durchflussstrecke des strömungsbeeinflussenden Elements etwa 6% bis 20%, bevorzugt etwa 8% bis 15%, insbesondere etwa 8,5 % bis 12 %, geringer sein als die Querschnittsfläche der Durchflussstrecke unmittelbar vor und nach dem strömungsbeeinflussenden Element. Ferner kann die Durchflussstrecke durch einen scharfen Übergang zu und von dem strömungsbeeinflussenden Element gekennzeichnet sein.

Vorteilhafterweise kann mit einer entsprechenden Reduzierung der Querschnittsfläche der Durchflussstrecke durch das strömungsbeeinflussende Element ein Wechsel von laminarer Strömung zu turbulenter Strömung bewirkt werden.

Vorzugsweise kann das strömungsbeeinflussende Element als Vorsprung ausgebildet sein, der sich von einer die Durchflussstrecke umgebenden Wand, die durch den ersten und zweiten Anschluss sowie den Messbereich gebildet wird, in die Durchflussstrecke erstreckt.

Insbesondere kann das strömungsbeeinflussende Element als eine im Wesentlichen ringförmige Einschnürung ausgebildet sein, welche bevorzugt strukturiert ist. So kann das strömungsbeeinflussende Element an der Innenseite der die Durchflussstrecke umgebenden Wand vollumfänglich ausgebildet sein und quer zur Längsrichtung der Vorrichtung bzw. Durchflussrichtung ausgerichtet sein. Ferner kann die Einschnürung kronenkorkenförmig strukturiert sein. Des Weiteren kann die Abmessung des strömungsbeeinflussenden Elements in Durchflussrichtung kleiner oder gleich der Abmessung sein, mit der das strömungsbeeinflussende Element von der Wand in die Durchflussstrecke hineinragt.

Vorzugsweise kann die Querschnittsfläche der Durchflussstrecke des strömungsbeeinflussenden Elements mindestens etwa 30%, bevorzugt mindestens etwa 40%, geringer sein als die Querschnittsfläche der Durchflussstrecke des ersten Anschlusses zu Beginn der Durchflussstrecke. Ferner kann die Querschnittsfläche der Durchflussstrecke des strömungsbeeinflussenden Elements maximal etwa 70 %, bevorzugt maximal etwa 65%, geringer sein als die Querschnittsfläche der Durchflussstrecke des ersten Anschlusses zu Beginn der Durchflussstrecke.

Vorzugsweise können der erste und/oder zweite Anschluss jeweils einen Kanal aufweisen, der zumindest einen Teil der Durchflussstrecke bildet, wobei an einem ersten Ende des Kanals das Fluid in die Vorrichtung einströmen bzw. ausströmen kann und an einem zweiten Ende des Kanals der Messbereich angeordnet ist. Vorzugsweise weist der erste Anschluss, durch welchen das Fluid bzw. Medium in die Vorrichtung einströmt, das strömungsbeeinflussende Element auf. Des Weiteren kann der zweite Anschluss ebenfalls ein weiteres strömungsbeeinflussendes Element aufweisen. Vorteilhafterweise entfällt somit die Notwendigkeit, bei einem Einbau der Vorrichtung in eine Leitung, die Flussrichtung des Fluids berücksichtigen zu müssen. Vorzugsweise kann das weitere strömungsbeeinflussende Element einstückig mit dem zweiten Anschluss ausgebildet sein.

Insbesondere kann der Kanal des ersten und zweiten Anschlusses einen im Wesentlichen kreisförmigen (Innen-)Querschnitt aufweisen, wobei sich der Querschnitt ausgehend von dem ersten Ende des Kanals in Richtung des strömungsbeeinflussenden Elements verjüngt, und wobei sich vorzugsweise der Querschnitt des Kanals ausgehend von dem strömungsbeeinflussenden Element in Richtung des zweiten Endes des Kanals erweitert.

Ferner können der erste und/oder zweite Anschluss lösbar mit dem Messbereich verbindbar sein, um einen modularen Aufbau der Vorrichtung zu ermöglichen. Insbesondere können der erste und zweite Anschluss sowie der Messbereich jeweils als längliche Hohlkörper ausgebildet sein, die miteinander lösbar verbindbar sind. Ferner können der erste und zweite Anschluss rotationssymmetrisch in Bezug auf ihre jeweilige Längsachse, welche im Wesentlichen parallel zur Haupt-Durchflussrichtung des Mediums durch die Vorrichtung verläuft, ausgebildet sein.

Vorzugsweise kann der Kanal des ersten oder zweiten Anschlusses ausgehend von dem ersten Ende des Kanals in Richtung des strömungsbeeinflussenden Elements konisch zulaufend sein und sich verjüngen. Vorteilhafterweise ermöglicht die konische Ausgestaltung des Kanals, dass sich die Fließgeschwindigkeit des Fluids bereits vor dem strömungsbeeinflussenden Element erhöht, was die Wirkung des strömungsbeeinflussenden Elements verstärkt. Des Weiteren kann die Querschnittsfläche der Durchflussstrecke am ersten Ende des Kanals größer sein als die Querschnittsfläche der Durchflussstrecke des strömungsbeeinflussenden Elements.

Des Weiteren kann der Kanal des ersten oder zweiten Anschlusses ausgehend von dem zweiten Ende des Kanals in Richtung des strömungsbeeinflussenden Elements konisch zulaufend sein und sich verjüngen. Entsprechend läuft der Kanal von beiden Richtungen kommend konisch auf das strömungsbeeinflussende Element zu. Des Weiteren kann die Querschnittsfläche der Durchflussstrecke am ersten und/oder zweiten Ende des Kanals größer sein als die Querschnittsfläche der Durchflussstrecke des strömungsbeeinflussenden Elements. Vorteilhafterweise ermöglicht die konische Ausgestaltung des Kanals, dass der erste oder zweite Anschluss einfach herstellbar ist, insbesondere wenn der erste oder zweite Anschluss durch ein Spritzgussverfahren hergestellt werden.

Ferner können der erste und/oder zweite Anschluss sowie der Messbereich mittels eines Spritzgussverfahrens hergestellt werden und aus einem Kunststoffmaterial gefertigt sein. Vorteilhafterweise können, durch die sich verjüngende Form des ersten und/oder zweiten Anschlusses von den jeweiligen Enden der Anschlüsse zu dem strömungsbeeinflussenden Element hin, der erste und/oder zweite Anschluss einfach durch das Spritzgussverfahren hergestellt werden. Alternativ kann der erste und/oder zweite Anschluss und/oder Messbereich mittels eines 3D-DruckVerfahrens hergestellt werden.

Vorzugsweise können der erste und/oder zweite Anschluss derart ausgebildet sein, dass die fluidführende Leitung selbstsichernd an dem ersten Anschluss und/oder dem zweiten Anschluss angeordnet werden kann, wobei der erste und/oder der zweite Anschluss insbesondere als Schlaucholive bzw. Schlauchstachel ausgebildet sein können.

Ferner kann der Messbereich einen Kanal aufweisen, der zumindest abschnittsweise einen Teil der Durchflussstrecke bildet. Dabei kann sich der Kanal zwischen zwei Öffnungen erstrecken, wobei an einer ersten Öffnung der zwei Öffnungen eine erste Anschlussaufnahme für den ersten Anschluss und an einer zweiten Öffnung der zwei Öffnungen eine zweite Anschlussaufnahme für den zweiten Anschluss vorgesehen sind. Die Vorrichtung ist somit modular aufgebaut und kann zusammengesetzt werden, indem der erste Anschluss vorzugsweise lösbar mit der ersten Anschlussaufnahme verbunden wird und der zweite Anschluss vorzugsweise lösbar mit der zweiten Anschlussaufnahme verbunden wird, so dass sich der Messbereich zwischen dem ersten Anschluss und dem zweiten Anschluss befindet.

Insbesondere können die erste und zweite Anschlussaufnahme in Längsrichtung der Vorrichtung bzw. des Messbereichs konisch verlaufend ausgebildet sein, und es kann ferner vorgesehen sein, dass der erste und zweite Anschluss einen komplementären konischen Verlauf aufweisen und in die entsprechende Anschlussaufnahme eingeführt werden, um mit dem Messbereich verbunden zu werden.

Vorzugsweise kann vorgesehen sein, dass der erste und/oder zweite Anschluss jeweils mit einem Sicherungselement an dem Messbereich sicherbar sind. Das Sicherungselement, beispielsweise eine Überwurfmutter oder eine Verriegelung, dient dabei der lösbaren Befestigung des ersten und/oder zweiten Anschlusses an dem Messbereich.

Vorteilhafterweise erlaubt der modulare Aufbau eine Anpassbarkeit der Vorrichtung an den konkreten Anwendungsfall. So lässt sich die Vorrichtung je nach Anwendungsfall mit Anschlüssen konfigurieren, die ein gewünschtes strömungsbeeinflussendes Element aufweisen.

Vorzugsweise kann vorgesehen sein, dass der Messbereich mindestens zwei Kontaktflächen aufweist, welche sich zumindest abschnittsweise entlang der Durchflussstrecke erstrecken, wobei die Kontaktflächen mit der vorzugsweise als Clamp-On Durchflussmesseinrichtung ausgebildete Durchflussmesseinrichtung koppelbar sind. Insbesondere können die Kontaktflächen außenseitig an dem Messbereich angeordnet sein, wobei der Normalenvektor der Kontaktflächen bevorzugt im Wesentlichen senkrecht zur Längsachse der Vorrichtung bzw. Durchflussrichtung steht. Zur Kopplung der Durchflussmesseinrichtung und Durchführung der Durchflussmessung kann vorgesehen sein, dass entsprechende Signalwandler bzw. Sensoren der Durchflussmesseinrichtung die Kontaktflächen bevorzugt flächig kontaktieren, um ein Signal, bspw. ein Ultraschallsignal, in die Vorrichtung einzugeben, wobei das Signal nach dem Durchlaufen der Durchflussstrecke von der Durchflussmesseinrichtung erfasst wird. Anhand eines Vergleichs des eingegebenen und des erfassten Signals kann die Messgröße ermittelt werden. Bevorzugt sind die mindestens zwei Kontaktflächen bezogen auf die Durchflussstrecke gegenüberliegend angeordnet. Vorzugsweise weist der Messbereich sechs Kontaktflächen auf, welche derart angeordnet sind, dass sie in Durchflussrichtung gesehen im Wesentlichen hexagonal angeordnet sind.

Vorzugsweise kann der Messbereich von dem strömungsbeeinflussenden Element in Durchflussrichtung des Fluids durch die Vorrichtung zwischen dem 5- bis 60fachen des Durchmessers des strömungsbeeinflussenden Elements beabstandet sein. Als Durchmesser wird dabei der kleinste Durchmesser des strömungsbeeinflussenden Elements quer zur Längsrichtung der Vorrichtung bzw. zur Durchflussrichtung verstanden. Ferner betrifft der Abstand den Abstand zwischen dem in Hauptströmungsrichtung liegenden Ende des strömungsbeeinflussenden Elements und dem entgegen der Hauptströmungsrichtung liegenden Beginn des Messbereichs bzw. der Kontaktflächen.

Ferner kann die Durchflussmesseinrichtung zwei zueinander bewegliche Gehäusehälften aufweisen, mittels derer die Durchflussmesseinrichtung geöffnet und geschlossen werden kann. Im geöffneten Zustand der Durchflussmesseinrichtung kann die Durchflussmesseinrichtung mit dem Messbereich gekoppelt werden, in dem der Messbereich an einer Messbereichsaufnahme der Durchflussmesseinrichtung angeordnet wird. Durch Schließen der Durchflussmesseinrichtung wird der Messbereich in der Durchflussmesseinrichtung und insbesondere in der Messbereichsaufnahme fixiert, so dass die Sensorik der Durchflussmesseinrichtung den Messbereich und insbesondere die Kontaktflächen kontaktieren kann. Die Durchflussmessung kann insbesondere im geschlossenen Zustand der Durchflussmesseinrichtung durchgeführt werden.

Ein zweiter Aspekt betrifft ein System aufweisend eine Vorrichtung gemäß dem ersten Aspekt und einer Durchflussmesseinrichtung. Ferner kann die Durchflussmesseinrichtung wie zuvor beschrieben ausgebildet sein.

Ein dritter Aspekt betrifft ein Verfahren zur Erfassung einer Messgröße des von einer Leitung geführten Fluids, aufweisend:
Anordnen einer Vorrichtung gemäß dem ersten Aspekt an einer fluidführenden Leitung,
Anordnen einer Durchflussmesseinrichtung an dem Messbereich,
Durchströmen der Durchflussstrecke mit dem Fluid, und Durchführen der Durchflussmessung.

Ferner kann die Durchflussmesseinrichtung wie zuvor beschrieben ausgebildet sein.

Des Weiteren kann das Verfahren vorsehen, dass die Strömungseigenschaften eines Fluids, welches durch den ersten Anschluss in die Vorrichtung einströmt, derart durch das strömungsbeeinflussende Element beeinflusst wird, dass das Fluid bzw. Medium im Messbereich eine turbulente Strömung aufweist.

Ein vierter Aspekt betrifft die Verwendung einer Vorrichtung nach dem ersten Aspekt zur Durchflussmessung eines Fluids.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: eine perspektivische Darstellung einer Vorrichtung zum Anordnen an einer fluidführenden Leitung und zum Anbringen einer Durchflussmesseinrichtung,
- Figur 2: eine Schnittansicht durch die Vorrichtung,
- Figur 3: den Messbereich der Vorrichtung,
- Figur 4: eine Schnittansicht des Messbereichs,
- Figur 5: einen Anschluss der Vorrichtung,
- Figur 6A und 6B: Messergebnisse mit einer konventionellen Vorrichtung,
- Figur 7A bis 7C: eine erste Ausgestaltung eines strömungsbeeinflussenden Elements sowie zugehörige Messergebnisse,
- Figur 8A bis 8C: eine zweite Ausgestaltung eines strömungsbeeinflussenden Elements sowie zugehörige Messergebnisse,
- Figur 9A bis 9C: eine dritte Ausgestaltung eines strömungsbeeinflussenden Elements sowie zugehörige
- Figur 10A bis 10C: Messergebnisse, eine vierte Ausgestaltung eines strömungsbeeinflussenden Elements sowie zugehörige Messergebnisse,
- Figur 11A bis 11C: eine fünfte Ausgestaltung eines strömungsbeeinflussenden Elements sowie zugehörige Messergebnisse,

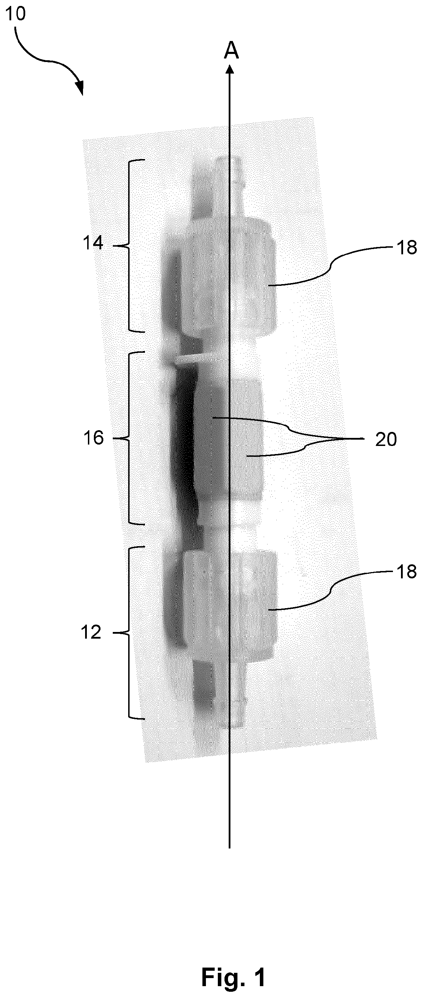

**Figur 1** zeigt eine perspektivische Darstellung einer Vorrichtung 10 zum Anordnen an einer fluidführenden Leitung (nicht dargestellt) und zum Anbringen einer Durchflussmesseinrichtung (nicht dargestellt). Die Vorrichtung 10 weist einen ersten und zweiten Anschluss 12/14 auf, mit dem die Vorrichtung 10 an einer fluidführenden Leitung bzw. zwischen zwei fluidführenden Leitungen angeordnet werden kann. Zwischen dem ersten und zweiten Anschluss 12/14 ist ein Messbereich 16 angeordnet, an welchem die Durchflussmesseinrichtung angeordnet werden kann.

Der erste Anschluss 12, der Messbereich 16 und der zweite Anschluss 14 legen eine Durchflussstrecke A fest, durch welche ein Fluid oder Medium durch die Vorrichtung 10 hindurchströmen kann. Beispielsweise kann der erste Anschluss 12 mit einer fluidführenden Leitung, wie einem Kunststoffschlauch, verbunden werden, wobei mittels der Leitung der Vorrichtung 10 ein Fluid bzw. Medium zugeführt werden kann. Ferner kann der zweite Anschluss 14 ebenfalls mit einer fluidführenden Leitung verbunden werden, in die das Fluid bzw. Medium aus der Vorrichtung 10 über den zweiten Anschluss 14 einströmt. Insbesondere kann vorgesehen sein, dass das Fluid in flüssiger Form vorliegt, wobei auch feste Partikel, wie beispielsweise Zellteile in dem Fluid vorhanden sein können.

Insbesondere können der erste und zweite Anschluss 12/14 sowie der Messbereich 16 einen Kanal 24/30 ausbilden, der die Durchflussstrecke A definiert, wobei das Fluid bzw. Medium durch den Kanal strömen kann. Die Durchflussstrecke A bzw. der Kanal können insbesondere länglich ausgebildet sein. Vorzugsweise verläuft die Durchflussstrecke A im Wesentlichen geradlinig, sodass die Haupt-Durchflussrichtung A des Fluids bzw. Mediums durch die Vorrichtung 10 im Wesentlichen gleichbleibend ist.

In der in Figur 1 dargestellten Ausführungsform ist die Vorrichtung 10 modular aufgebaut, wobei der erste und zweite Anschluss 12/14 jeweils lösbar mit dem Messbereich 16 verbindbar sind. Zur Befestigung bzw. Sicherung des ersten bzw. zweiten Anschlusses 12/14 an dem Messbereich 16 sind Sicherungselemente 18 vorgesehen. In der gezeigten Ausführungsform sind die Sicherungselemente 18 als Überwurfmuttern ausgebildet, mit denen der erste und zweite Anschluss 12/14 an dem Messbereich 16 befestigt werden kann.

Der Messbereich 16 weist mindestens zwei Kontaktflächen 20 auf, welche sich auf der Außenseite des Messbereichs 16 zumindest abschnittsweise entlang der Durchflussstrecke A bzw. Haupt-Durchflussrichtung A erstrecken. Bevorzugt sind die Kontaktflächen 20 bezogen auf die Durchflussstrecke A gegenüberliegend angeordnet und verlaufen insbesondere parallel zueinander. In der in Figur 1 dargestellten Ausführungsform weist der Messbereich 16 sechs Kontaktflächen 20 auf, welche hexagonal angeordnet sind. Insbesondere bilden jeweils zwei gegenüberliegende Kontaktflächen 20 ein Kontaktflächenpaar, sodass der Messbereich 16 drei Kontaktflächenpaare aufweist.

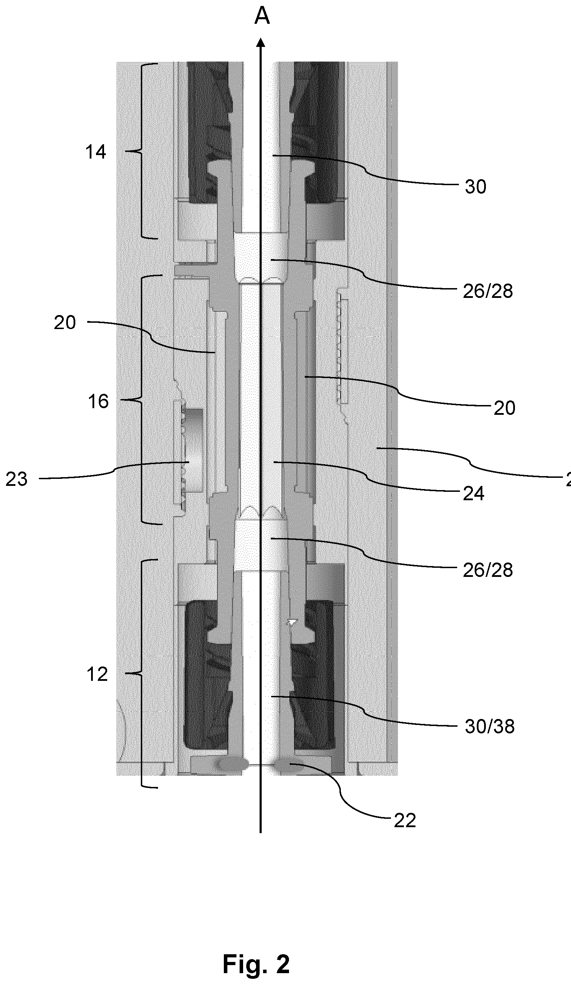

Wie in der in Figur 2 gezeigten Schnittansicht der Vorrichtung 10 dargestellt, weist die Vorrichtung 10 ein in oder an der Durchflussstrecke A angeordnetes strömungsbeeinflussendes Element 22 auf. Das strömungsbeeinflussende Element 22 ist in der Haupt-Durchflussrichtung A liegend vor dem Messbereich 16 angeordnet und derart ausgestaltet, dass ein in die Vorrichtung 10 einströmendes Fluid bzw. Medium, das mit einer im Wesentlichen laminaren Strömung in die Vorrichtung 10 einströmt, im Messbereich 16 eine im Wesentlichen turbulente Strömung aufweist. Durch das Beeinflussen der Strömung des Fluids bzw. Mediums hin zu einer turbulenten Strömung kann die Messgenauigkeit der Durchflussmessung verbessert werden. In der gezeigten Ausführungsform ist das strömungsbeeinflussende Element 22 an der Innenseite des Kanals 30 des ersten Anschlusses 12 ausgebildet und kann insbesondere in die Durchflussstrecke A hineinreichen, wo es eine Verengung des Querschnitts der Durchflussstrecke A bewirkt. Das strömungsbeeinflussende Element 22 ist einstückig mit dem ersten Anschluss 12 oder mit dem zweiten Anschluss 14 ausgebildet.

Die Kontaktflächen 20 können mit der Durchflussmesseinrichtung 21 gekoppelt werden, indem die Durchflussmesseinrichtung 21 an dem Messbereich 16 angeordnet wird. Ferner kann die Durchflussmesseinrichtung 21 eine entsprechende Sensorik 23 aufweisen, mit der die Durchflussmesseinrichtung 21 ein Eingabesignal, beispielsweise ein Ultraschallsignal, in den Messbereich 16 über die Kontaktflächen 20 eingibt und ein auf dem Eingabesignal basierendes Ausgabesignal empfängt. Basierend auf einem Vergleich des Eingabe- und Ausgabesignals kann eine Messgröße des Fluids bzw. Mediums, welches den Messbereich 16 durchströmt, ermittelt werden.

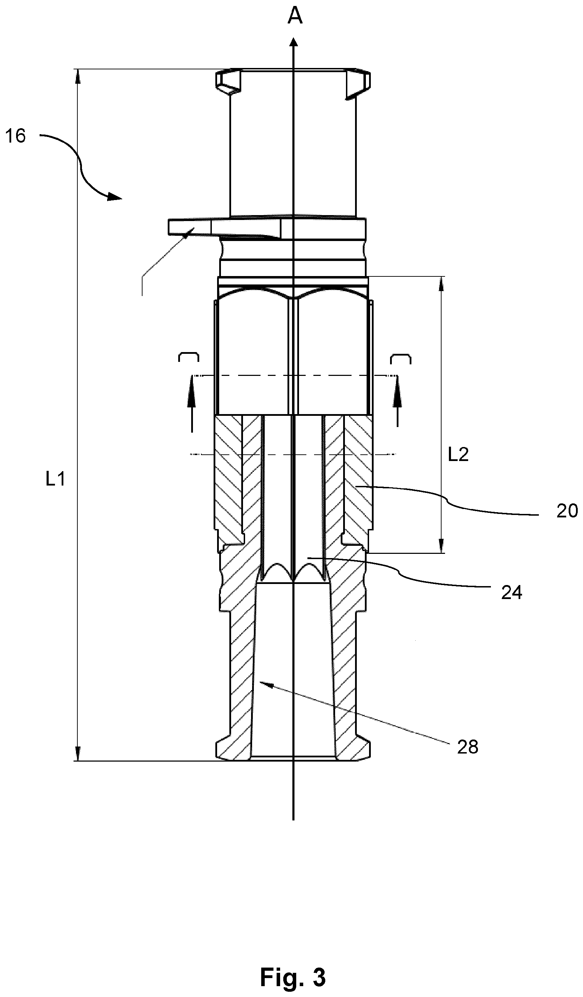

**Figur 3** zeigt beispielhaft eine Ausführungsform des Messbereichs 16. Der Messbereich 16 ist als länglicher Hohlkörper ausgebildet und weist einen Kanal 24 auf, der einen Teil der Durchflussstrecke definiert. An den in Längsrichtung liegenden Enden 26 des Messbereichs 16 ist jeweils eine Anschlussaufnahme 28 vorgesehen, die jeweils einen Anschluss 12/14, wie beispielsweise den ersten Anschluss 12 oder den zweiten Anschluss 14, aufnehmen kann. Zwischen den Anschlussaufnahmen 28 sind die Kontaktflächen 20 des Messbereichs 16 angeordnet.

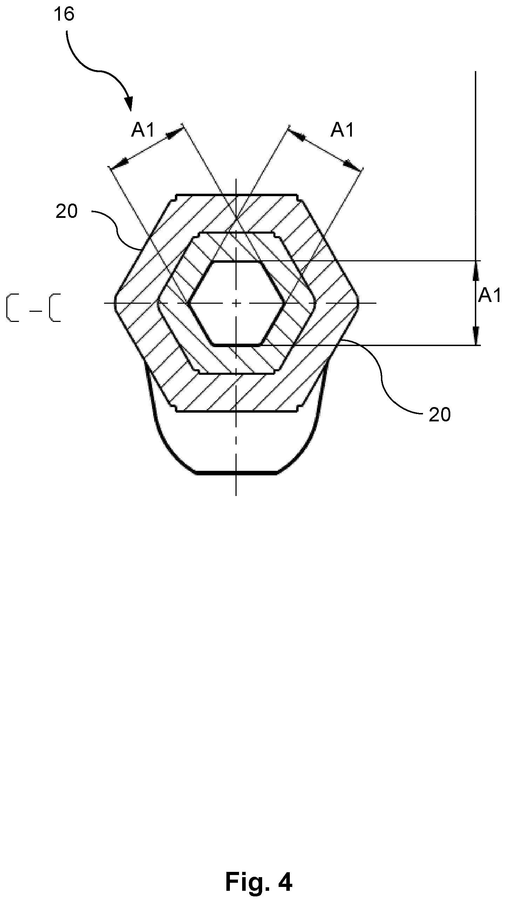

Wie in **Figur 4** dargestellt, welche einen Querschnitt entlang der in Figur 3 gezeigten CC Linie durch den Messbereich 16 zeigt, sind die sechs Kontaktflächen 20 hexagonal angeordnet. Die Kontaktflächen 20 sind vorzugsweise rechteckförmig ausgebildet, wobei die Längsrichtung der Kontaktflächen 20 im Wesentlichen parallel zu der Haupt-Durchflussrichtung A des Fluids bzw. Mediums durch die Vorrichtung 10 verläuft bzw. parallel zur Längsrichtung der Vorrichtung verläuft. Ferner ist der Innenquerschnitt des Messbereichs 16, der von den Kontaktflächen 20 umfasst wird, ebenfalls hexagonal geformt.

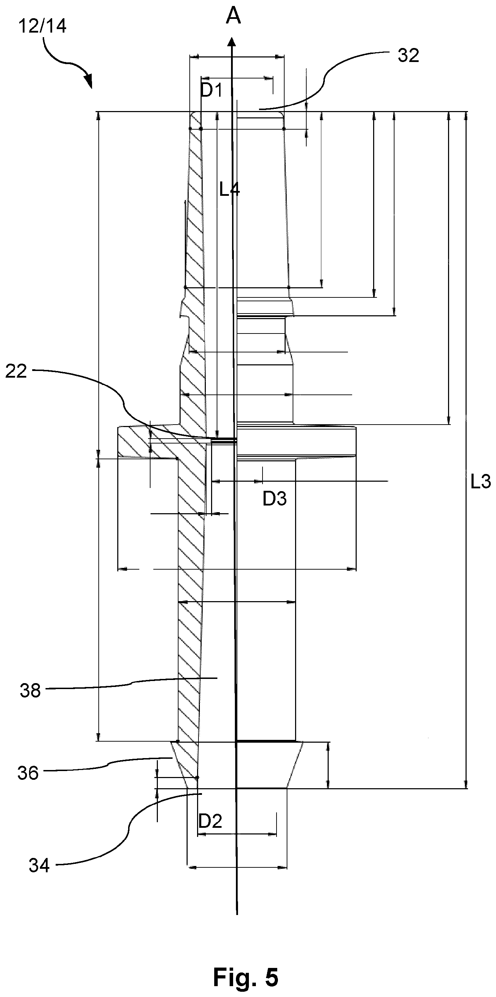

Des Weiteren zeigt **Figur 5** beispielhaft einen Anschluss, wie er bspw. als erster Anschluss 12 und/oder zweiter Anschluss 14 verwendet werden kann. Der Anschluss 12/14 ist als länglicher Hohlkörper ausgebildet und weist einen Kanal 24 auf, der einen Teil der Durchflussstrecke definiert. Der Anschluss 12/14 kann insbesondere rotationssymmetrisch zu dessen Längsachse sein. Ein in Längsrichtung des Anschusses 12/14 liegendes erstes Ende 32 (messbereichsseitiges Ende) kann dazu ausgebildet sein, von der Anschlussaufnahme 28 aufgenommen zu werden. Ein in Längsrichtung dem ersten Ende 32 gegenüberliegendes zweites Ende 34 (leitungsseitiges Ende) des Anschlusses 12/14 kann dazu ausgebildet sein, mit einer Leitung verbunden zu werden. Insbesondere kann das zweite Ende 34 eine Schlaucholive 36 bzw. einen Schlauchstachel 36 aufweisen, mit dem die Leitung an dem Anschluss 12/14 bzw. der Vorrichtung 10 gesichert werden kann.

Ferner weist der Anschluss 12/14 das strömungsbeeinflussende Element 22 auf, welches in Längsrichtung A gesehen im Wesentlichen mittig in dem Anschluss 12/14 angeordnet ist, und von der die Durchflussstrecke A umgebenden Wand 38 des Anschluss 12/14 in die Durchflussstrecke A hineinreicht. Ferner weist der Anschluss 12/14 einen im wesentlichen kreisförmigen Innenquerschnitt auf, wobei sich der Querschnitt der Durchflussstrecke A von dem ersten Ende 32 in Richtung des strömungsbeeinflussenden Elements 22 und von dem zweiten Ende 34 in Richtung des strömungsbeeinflussenden Elements 22 jeweils verjüngt. Ferner ist die Querschnittsfläche der Durchflussstrecke A unmittelbar vor und nach dem strömungsbeeinflussenden Element 22 größer als im Bereich des strömungsbeeinflussenden Elements 22. Insbesondere kann die Durchflussstrecke A ausgehend von dem ersten Ende 32 und dem zweiten Ende 34 jeweils konisch in Richtung des strömungsbeeinflussenden Elements 22 zulaufend ausgebildet sein.

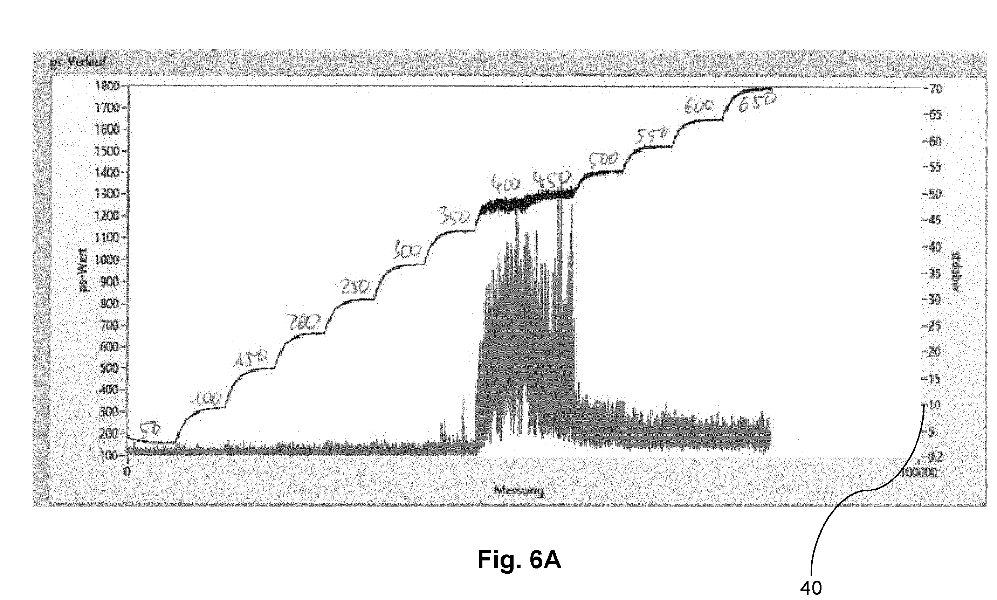

Unter Bezugnahme auf die **Figuren 6A bis 11C** wird im Folgenden die Wirkung des strömungsbeeinflussenden Elements 22 sowie verschiedene Ausgestaltungen des strömungsbeeinflussenden Elements 22 diskutiert.

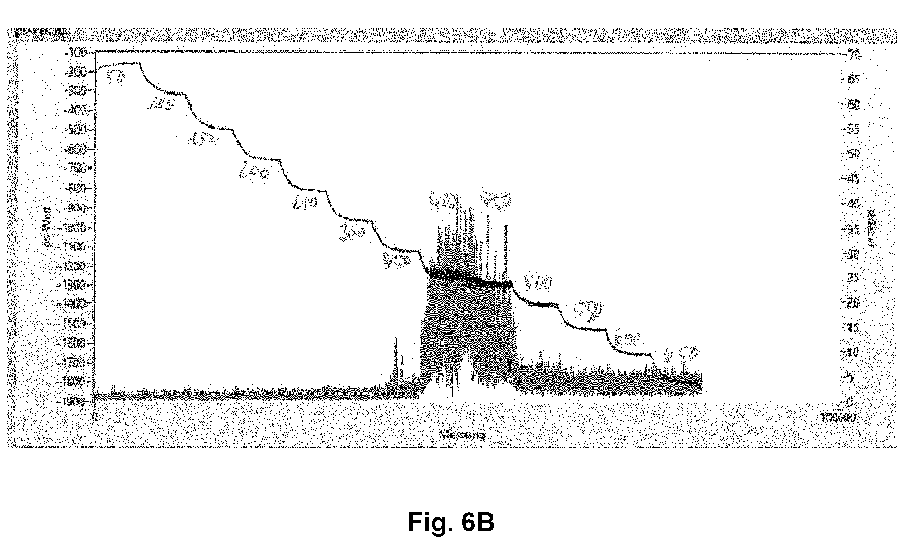

Dabei zeigen die **Figuren 6A** **und** **6B** die Standardabweichung eines Messsignals bei einer konventionellen Vorrichtung, die kein erfindungsgemäßes strömungsbeeinflussenden Element 22 aufweist. Figur 6A zeigt dabei das Messsignal bei einer positiven Flussrichtung, also wenn das Fluid bzw. Medium die Vorrichtung 10 in Richtung der in Figur 1 gezeigten Haupt-Durchflussrichtung A durchströmt, und Figur 6B bei einer entgegengesetzten Flussrichtung. Dabei ist bei einem Volumenstrom von 400 bis 450 ml/min ein nichtlineares Verhalten der Durchflussmesseinrichtung zu erkennen. Ferner ist anhand der dargestellten Standardabweichung des Messsignals 40 ein starkes Signalrauschen bei einem Volumenstrom von 400 bis 450 ml/min zu erkennen.

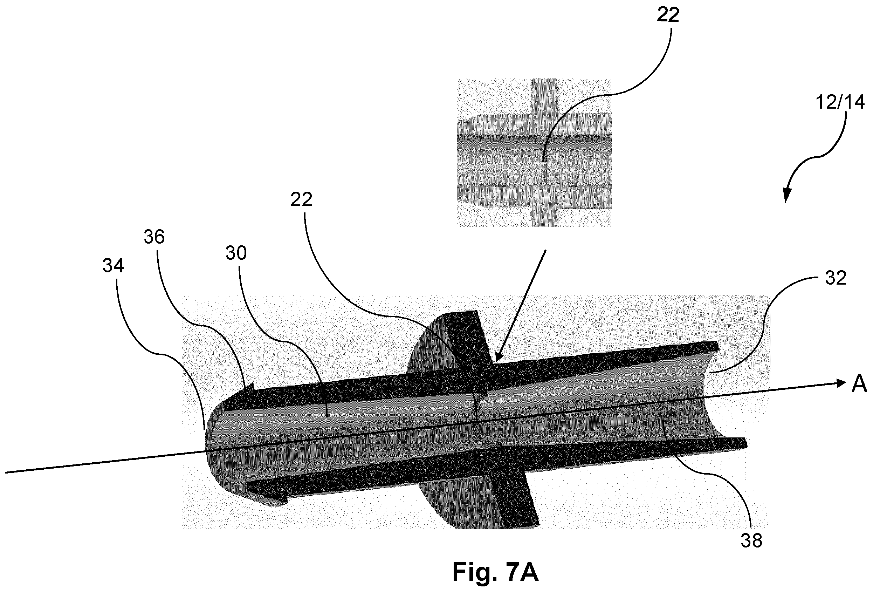

Die **Figuren 7A bis 7C** betreffen eine erste Ausgestaltung des strömungsbeeinflussenden Elements 22. Wie in Figur 7A dargestellt, ist das strömungsbeeinflussende Element 22 als ringförmige Einschnürung an der Innenseite des Kanals 30 vollumfänglich ausgebildet.

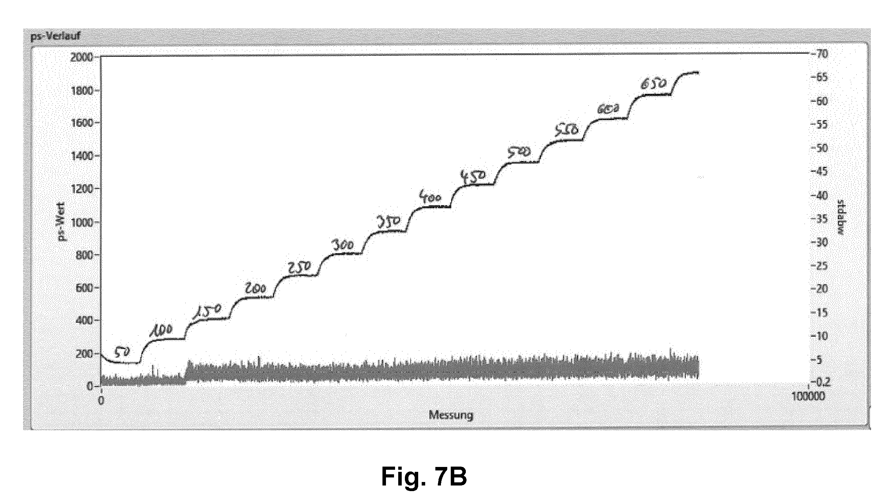

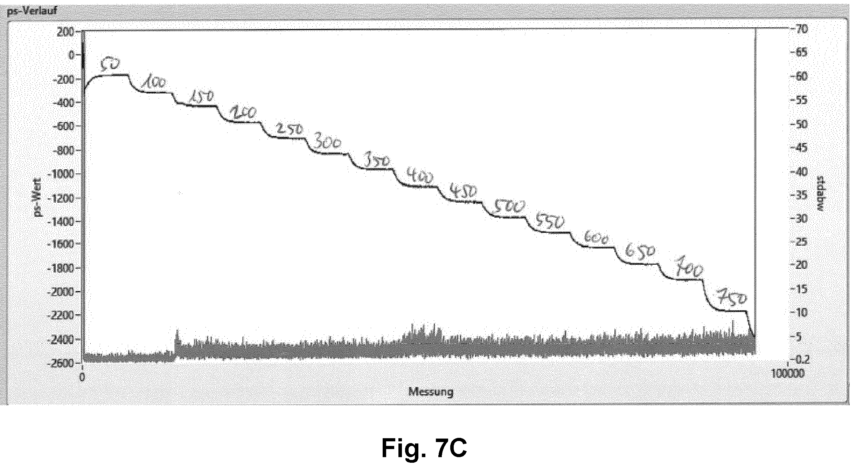

Im Vergleich zu den Figuren 6A und 6B, zeigt die in Figur 7A gezeigte Ausführungsform eine deutliche Verbesserung der Durchflussmessung. Aus den Figuren 7B und 7C ist erkennbar, dass sich der Umschlagpunkt von laminarer Strömung zu turbulenter Strömung zu niedrigeren Volumenströmen hin verschoben hat. Der Umschlagpunkt liegt nunmehr bei 100-150 ml/min, sowohl in positiver Flussrichtung (Figur 7B), als auch in negativer bzw. entgegengesetzter Flussrichtung (Figur 7C). Des Weiteren hat sich die Linearität im Bereich des Umschlagpunktes verbessert und das Signalrauschen ist um eine Größenordnung reduziert.

Insbesondere kann das strömungsbeeinflussende Element 22 als Einschnürung angesehen werden, wenn dessen Abmessung in Längsrichtung des Anschlusses 12/14 kleiner ist oder ungefähr gleichgroß ist wie die Abmessung, mit der das strömungsbeeinflussende Element 22 von der Innenseite des Kanals 30 in die Durchflussstrecke A hineinragt. Vorzugsweise kann die Querschnittsfläche der Durchflussstrecke A des strömungsbeeinflussenden Elements 22 etwa 6% bis 20%, bevorzugt etwa 8% bis 15%, insbesondere etwa 8,5 % bis 12 %, geringer sein als die Querschnittsfläche der Durchflussstrecke A unmittelbar vor und bevorzugt unmittelbar nach dem strömungsbeeinflussenden Element 22. Ferner kann die Durchflussstrecke A durch einen scharfen Übergang zu und von dem strömungsbeeinflussenden Element 22 gekennzeichnet sein.

Bevorzugt ist das strömungsbeeinflussende Element 22 in Längsausdehnung des Anschlusses 12/14 im Wesentlichen mittig angeordnet. Im Rahmen dieser Offenbarung wird eine Anordnung des strömungsbeeinflussenden Elements 22 im Bereich von maximal +/- 15%, bevorzugt von maximal +/- 10%, der Länge des Anschlusses 12/14 um den Mittelpunkt des Anschlusses 12/14 in dessen Längsrichtung als im Wesentlichen mittig angesehen.

Ferner kann die Querschnittsfläche der Durchflussstrecke A im Bereich des strömungsbeeinflussenden Elements 22 im Vergleich zu der Querschnittsfläche der Durchflussstrecke am ersten Ende 32 und/oder zweiten Ende 34 des Anschlusses 12/14 um mindestens etwa 40%, bevorzugt um mindestens etwa 45%, verringert sein. Als erstes und zweites Ende 32/34 werden insbesondere der in Längsrichtung gelegene Anfang bzw. das in Längsrichtung gelegene Ende des Anschlusses 12/14 gesehen.

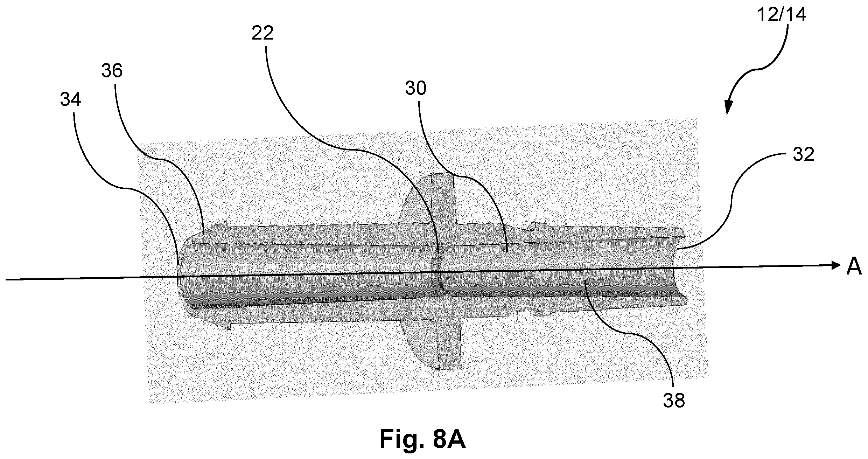

Die **Figuren 8A bis 8C** betreffen eine zweite Ausgestaltung des strömungsbeeinflussenden Elements 22, bei der die in der ersten Ausgestaltung gezeigte Einschnürung stärker ausgeprägt ist. Wie in Figur 8A dargestellt, ist das strömungsbeeinflussende Element 22 als ringförmige Einschnürung an der Innenseite des Kanals 30 vollumfänglich ausgebildet. Insbesondere kann das strömungsbeeinflussende Element 22 als Einschnürung angesehen werden, wenn dessen Abmessung in Längsrichtung des Anschlusses 12/14 kleiner ist oder ungefähr gleichgroß ist wie die Abmessung, mit der das strömungsbeeinflussende Element 22 von der Innenseite des Kanals 30 in die Durchflussstrecke A hineinragt. Im Vergleich zu dem in Figur 7A gezeigten strömungsbeeinflussenden Element 22 weist das in Fig. 8A gezeigte strömungsbeeinflussende Element 22 eine reduzierte Querschnittsfläche auf. Mit anderen Worten, dass strömungsbeeinflussende Element 22 erstreckt sich von der Innenseite des Kanals 39 weiter in die Durchflussstrecke A hinein.

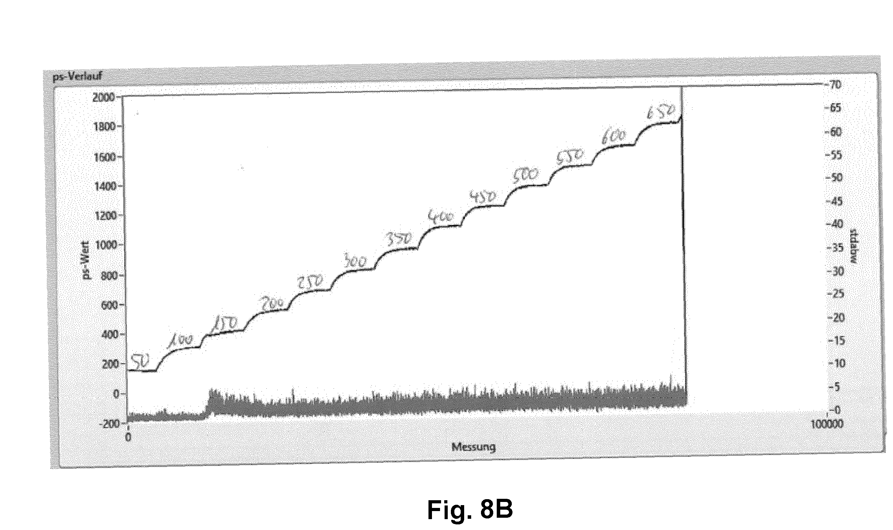

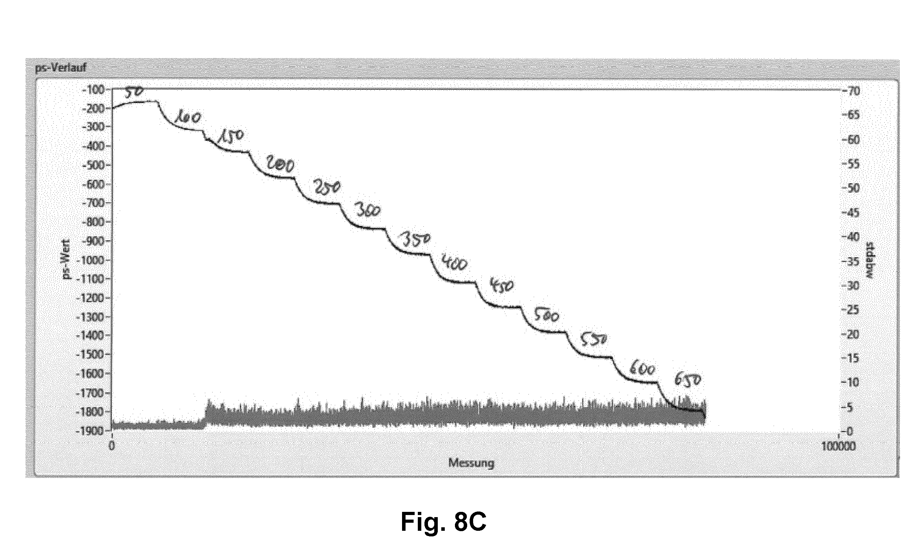

Im Vergleich zu den Figuren 6A und 6B, zeigt die in Figur 8A gezeigte Ausführungsform eine deutliche Verbesserung der Durchflussmessung. Aus den Figuren 8B und 8C ist erkennbar, dass sich der Umschlagpunkt von laminarer Strömung zu turbulenter Strömung zu niedrigeren Volumenströmen hin verschoben hat. Der Umschlagpunkt liegt nunmehr bei 100-150 ml/min, sowohl in positiver Flussrichtung (Figur 8B), als auch in negativer bzw. entgegengesetzter Flussrichtung (Figur 8C). Des Weiteren hat sich die Linearität im Bereich des Umschlagpunktes verbessert und das Signalrauschen ist um eine Größenordnung reduziert.

Ferner kann die Querschnittsfläche der Durchflussstrecke im Bereich des strömungsbeeinflussenden Elements 22 im Vergleich zu der Querschnittsfläche der Durchflussstrecke am ersten Ende 32 und/oder zweiten Ende 34 des Anschlusses 12 um mindestens etwa 50% verringert sein.

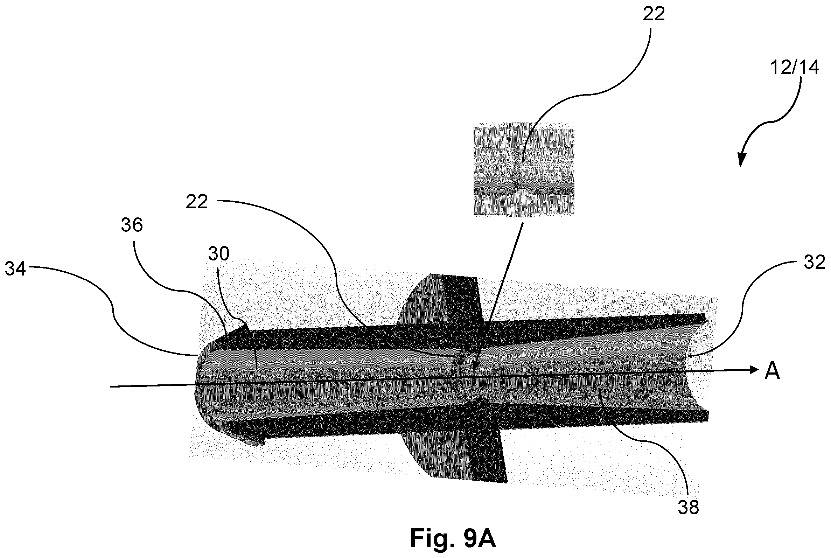

Die **Figuren 9A bis 9C** betreffen eine dritte Ausgestaltung des strömungsbeeinflussenden Elements 22. Wie in Figur 9A dargestellt, ist das strömungsbeeinflussende Element 22 als ringförmiges Profil an der Innenseite des Kanals 30 vollumfänglich ausgebildet. Bevorzugt ist das strömungsbeeinflussende Element 22 in Längsausdehnung des Anschlusses 12/14 im Wesentlichen mittig angeordnet. Im Rahmen dieser Offenbarung wird eine Anordnung des strömungsbeeinflussenden Elements 22 im Bereich von maximal +/- 15%, bevorzugt von maximal +/- 10%, der Länge des Anschlusses 12/14 um den Mittelpunkt der Längsausdehnung des Anschlusses 12/14 als im Wesentlichen mittig angesehen.

Insbesondere kann das strömungsbeeinflussende Element 22 als Profil angesehen werden, wenn dessen Abmessung in Längsrichtung des Anschlusses 12/14 größer ist als die Abmessung, mit der das strömungsbeeinflussende Element 22 von der Innenseite des Kanals 30 in die Durchflussstrecke hineinragt. Bevorzugt ist die Abmessung des strömungsbeeinflussenden Elements 22 in Längsrichtung des Anschlusses 12/14 mindestens doppelt so groß wie die Abmessung, mit der das strömungsbeeinflussende Element 22 von der Innenseite des Kanals 30 in die Durchflussstrecke A hineinragt.

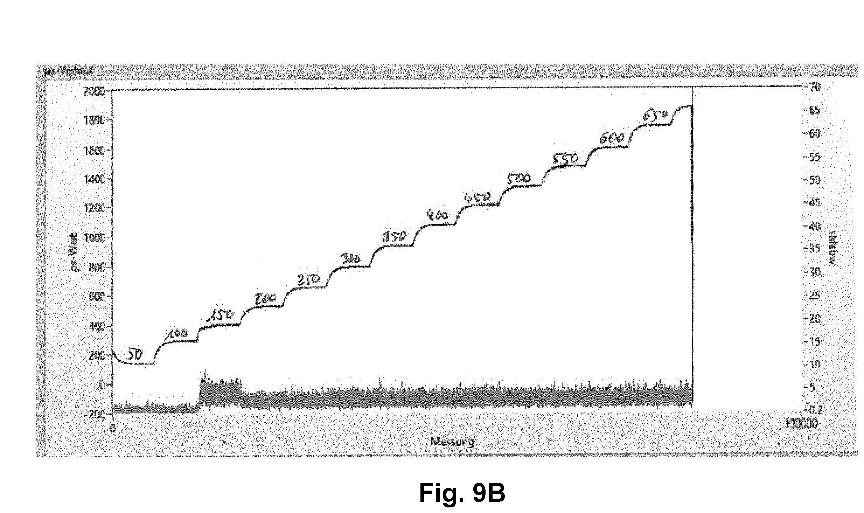

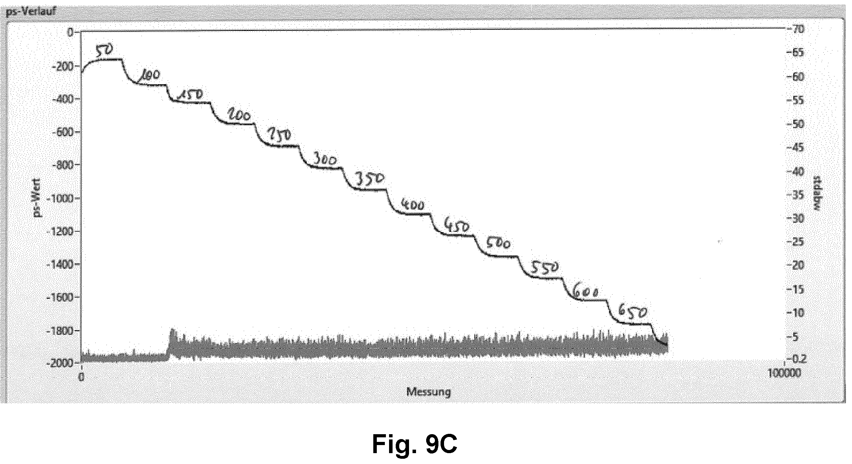

Im Vergleich zu den Figuren 6A und 6B, zeigt die in Figur 9A gezeigte Ausführungsform eine deutliche Verbesserung der Durchflussmessung. Aus den Figuren 9B und 9C ist erkennbar, dass sich der Umschlagpunkt von laminarer Strömung zu turbulenter Strömung zu niedrigeren Volumenströmen hin verschoben hat. Der Umschlagpunkt liegt nunmehr bei 100-150 ml/min, sowohl in positiver Flussrichtung (Figur 9B), als auch in negativer bzw. entgegengesetzter Flussrichtung (Figur 9C). Des Weiteren hat sich die Linearität im Bereich des Umschlagpunktes verbessert und das Signalrauschen ist um eine Größenordnung reduziert.

Ferner kann die Querschnittsfläche der Durchflussstrecke A im Bereich des strömungsbeeinflussenden Elements 22 im Vergleich zu der Querschnittsfläche der Durchflussstrecke A am ersten Ende 32 und/oder zweiten Ende 34 des Anschlusses 12 um mindestens etwa 40%, bevorzugt um mindestens etwa 45%, verringert sein. Als erstes und zweites Ende 32/34 werden insbesondere der in Längsrichtung gelegene Anfang bzw. das in Längsrichtung gelegene Ende des Anschlusses 12/14 gesehen.

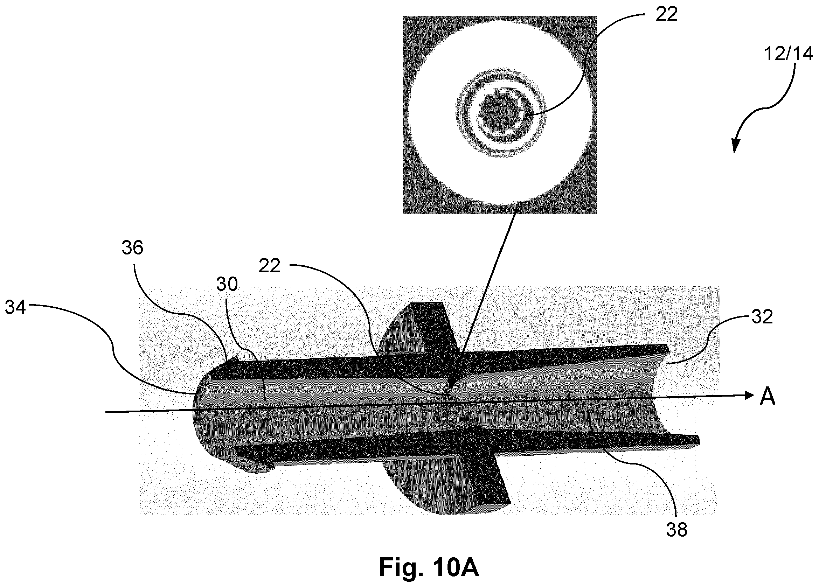

Die **Figuren 10A bis 10C** betreffen eine vierte Ausgestaltung des strömungsbeeinflussenden Elements 22. Ähnlich wie die erste Ausgestaltung ist das strömungsbeeinflussende Element 22 als Einschnürung an der Innenseite des Kanals 30 vollumfänglich ausgebildet, wobei das strömungsbeeinflussende Element 22 zusätzlich strukturiert ist und Aussparungen aufweist, wodurch der Innendurchmesser der Durchflussstrecke A im Bereich des strömungsbeeinflussenden Elements 22 unter verschiedenen Winkeln um die Längsachse des Anschlusses 12/14 ungleich ist. Wie aus Figur 10A ersichtlich, ist die Struktur des strömungsbeeinflussenden Elements 22 in Längsrichtung blickend kronenkorkenförmig.

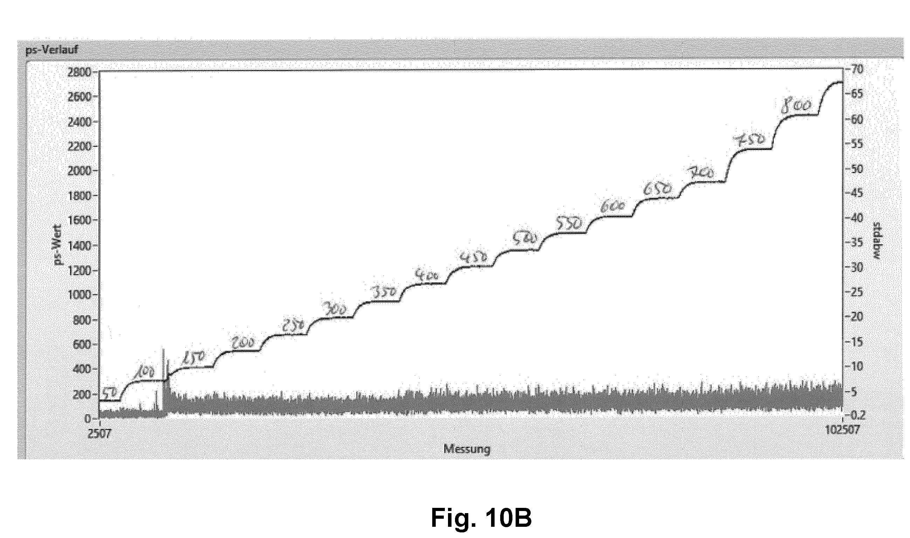

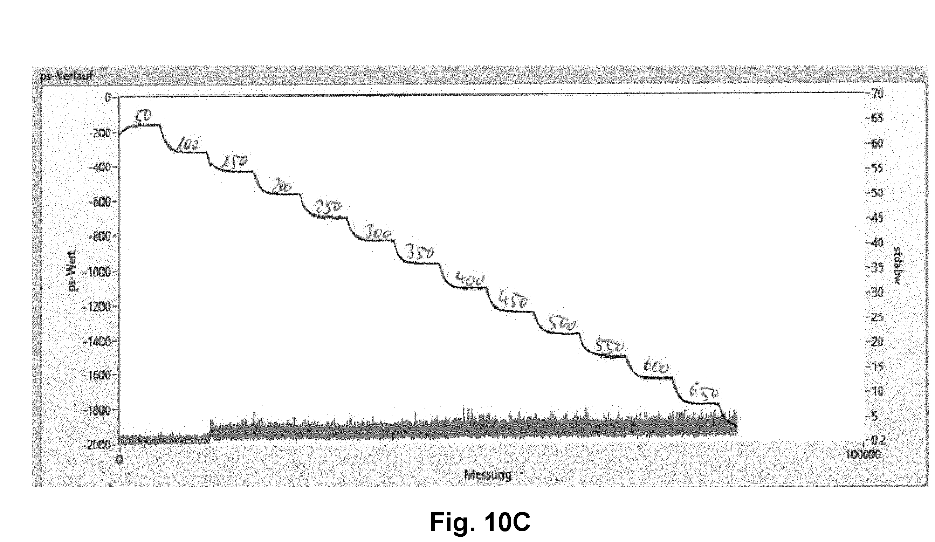

Im Vergleich zu den Figuren 6A und 6B, zeigt die in Figur 10A gezeigte Ausführungsform eine deutliche Verbesserung der Durchflussmessung. Aus den Figuren 10B und 10C ist erkennbar, dass sich der Umschlagpunkt von laminarer Strömung zu turbulenter Strömung zu niedrigeren Volumenströmen hin verschoben hat. Der Umschlagpunkt liegt nunmehr bei 100-150 ml/min, sowohl in positiver Flussrichtung (Figur 10B), als auch in negativer bzw. entgegengesetzter Flussrichtung (Figur 10C). Des Weiteren hat sich die Linearität im Bereich des Umschlagpunktes verbessert und das Signalrauschen ist um eine Größenordnung reduziert.

Ferner kann die Querschnittsfläche der Durchflussstrecke A im Bereich des strömungsbeeinflussenden Elements 22 im Vergleich zu der Querschnittsfläche der Durchflussstrecke A am ersten Ende 32 und/oder zweiten Ende 34 des Anschlusses 12/14 um mindestens etwa 45% verringert sein.

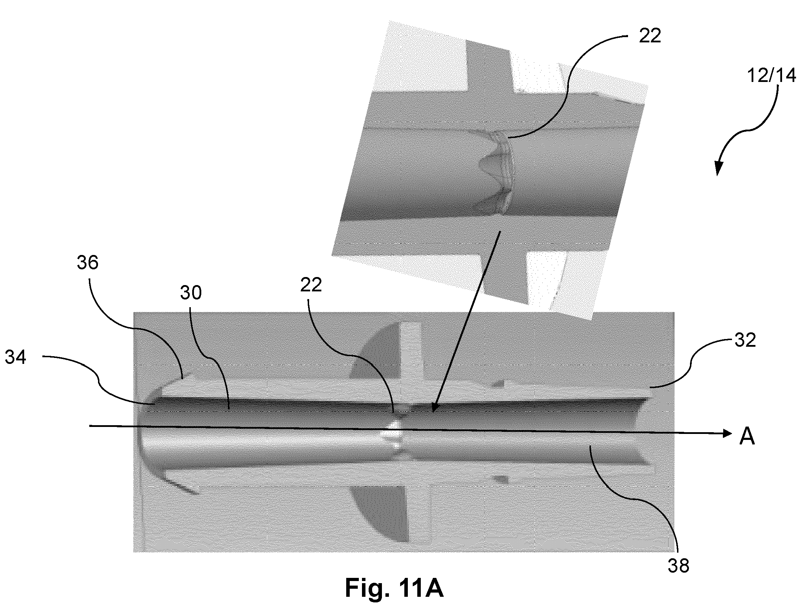

Die **Figuren 11A bis 11C** betreffen eine fünfte Ausgestaltung des strömungsbeeinflussenden Elements 22. Ähnlich wie die vierte Ausgestaltung ist das strömungsbeeinflussende Element 22 kronenkorkenförmig strukturiert. Wobei die Strukturierung in Längsrichtung des Anschlusses 12/14 länglicher ausgebildet ist als in der vierten Ausgestaltung. Insbesondere kann das strömungsbeeinflussende Element 22 in Längsrichtung des Anschlusses 12/14 eine mindestens dreimal größere Abmessung aufweisen als die Abmessung, mit der das strömungsbeeinflussende Element 22 von der Innenseite des Kanals 30 in die Durchflussstrecke A hineinragt.

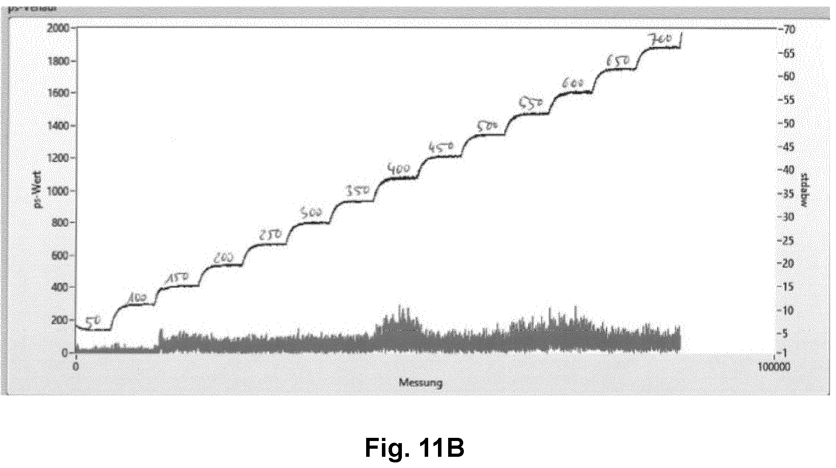

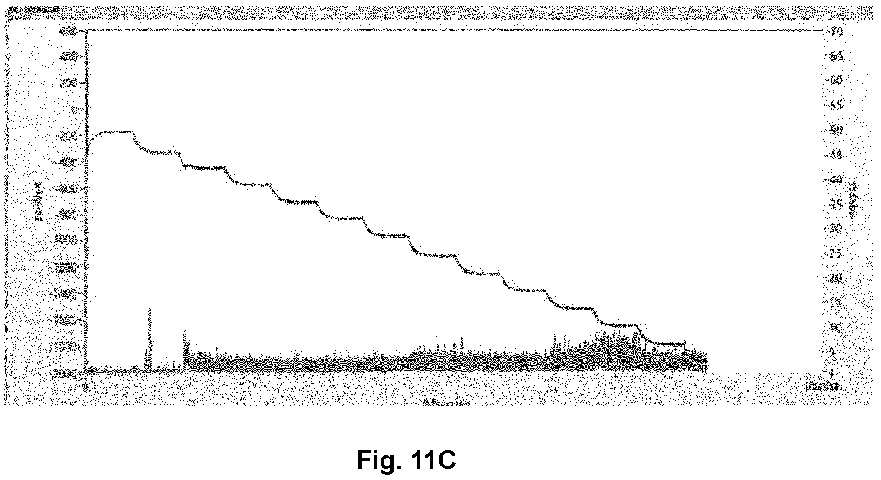

Im Vergleich zu den Figuren 6A und 6B, zeigt die in Figur 11A gezeigte Ausführungsform eine deutliche Verbesserung der Durchflussmessung. Aus den Figuren 11B und 11C ist erkennbar, dass sich der Umschlagpunkt von laminarer Strömung zu turbulenter Strömung zu niedrigeren Volumenströmen hin verschoben hat. Der Umschlagpunkt liegt nunmehr bei 100-150 ml/min, sowohl in positiver Flussrichtung (Figur 11B), als auch in negativer bzw. entgegengesetzter Flussrichtung (Figur 11C). Des Weiteren hat sich die Linearität im Bereich des Umschlagpunktes verbessert und das Signalrauschen ist um eine Größenordnung reduziert.

Ferner kann die Querschnittsfläche der Durchflussstrecke A im Bereich des strömungsbeeinflussenden Elements 22 im Vergleich zu der Querschnittsfläche der Durchflussstrecke am ersten Ende 32 und/oder zweiten Ende 34 des Anschlusses 12 um mindestens etwa 45% verringert.

Bezugnehmend auf die **Figuren 3 bis 5** wird eine Ausführungsform der Vorrichtung 10 näher erläutert. So weist der in Figur 3 gezeigte Messbereich 16 eine Länge L1 von 30 mm bis 40 mm, bevorzugt von ungefähr 35 mm, auf. Die Kontaktflächen 20 sind in Längsrichtung A gesehen mittig an dem Messbereich 16 angeordnet und weisen eine Länge L2 zwischen 10 mm und 14 mm auf. Des Weiteren können die Anschlussaufnahmen 28 eine Länge von 6 mm bis 10 mm aufweisen, so dass der erste und zweite Anschluss 12/14 entsprechend tief entlang der Längsrichtung A in die Anschlussaufnahmen 28 einführbar sind. Ferner können gegenüberliegende Seiten des hexagonalen Innenquerschnitts (siehe Figur 4) einen Abstand A1 von zwischen 3 mm und 3,4 mm, bevorzugt ungefähr 3,18 mm, voneinander aufweisen. Ferner sind Ausgestaltungen denkbar, die einen Abstand A1 von bis zu 9 mm aufweisen.

Der in Figur 5 gezeigte Anschluss 12/14 kann eine Länge L3 von 25 mm bis 33 mm, bevorzugt von ungefähr 28,8 mm, aufweisen. Der Durchmesser D1 der Durchflussstrecke A am messbereichsseitigen ersten Ende 32 kann zwischen 2,87 mm und 3,27 mm, bevorzugt 3,07 mm, betragen. Der Durchmesser D2 der Durchflussstrecke A am leitungsseitigen zweiten Ende 34 kann zwischen 3,17 mm und 3,57 mm, bevorzugt 3,37 mm, betragen. Das strömungsbeeinflussende Element 22 kann insbesondere als Einschnürung (wie zuvor beschrieben) ausgebildet sein.

Das strömungsbeeinflussende Element 22 kann von der Innenseite des Kanals 30 zwischen 0,1 mm und 0,3 mm, bevorzugt 0,2 mm, vollumfänglich von der Innenseite des Kanals 30 in die Durchlaufstrecke A hineinragen. Insbesondere kann der Durchmesser D3 der Durchflussstrecke A im Bereich des strömungsbeeinflussenden Elements 22 zwischen 2,0 mm und 2,4 mm, bevorzugt ungefähr 2,2 mm, betragen. Des Weiteren kann das strömungsbeeinflussende Element 22 um die Länge L4 von 11,9 mm bis 15,9 mm, bevorzugt 13,9 mm, von dem messbereichsseitigen ersten Ende 32 beabstandet sein.

### Bezugszeichenliste

- 10: Vorrichtung zum Anordnen an einer fluidführenden Leitung
- 12: erster Anschluss
- 14: zweite Anschluss
- 16: Messbereich
- 18: Sicherungselement
- 20: Kontaktflächen
- 21: Durchflussmesseinrichtung
- 22: strömungsbeeinflussende Element
- 23: Sensorik
- 24: Kanal Messbereich
- 26: Ende Messbereich
- 28: Anschlussaufnahme
- 30: Kanal Anschluss
- 32: erstes Ende von Anschluss (messbereichsseitig)
- 34: zweites Ende von Anschluss (leitungsseitig)
- 36: Schlaucholive bzw. Schlauchstachel
- 38: Wand von Anschluss
- 40: Standardabweichung Messsignal
- A: Durchflussstrecke bzw. Haupt-Durchflussrichtung/Längsrichtung der Vorrichtung

## Patentansprüche

1. Vorrichtung (10) zum Anordnen an einer fluidführenden Leitung und zum Anbringen einer Durchflussmesseinrichtung (21), insbesondere einer Ultraschall-Durchflussmesseinrichtung, zur Erfassung einer Messgröße des von der Leitung geführten Fluids, wobei die Vorrichtung (10) aufweist:
- einen ersten und einen zweiten Anschluss (12, 14), mittels derer die Vorrichtung (10) mit der fluidführenden Leitung verbindbar ist,
- einen zwischen dem ersten Anschluss (12) und dem zweiten Anschluss (14) angeordneten Messbereich (16), der mit der Durchflussmesseinrichtung zum Erfassen der Messgröße koppelbar ist, wobei der erste Anschluss (12), der Messbereich (16) und der zweite Anschluss (14) eine Durchflussstrecke (A) für das Fluid durch die Vorrichtung (10) festlegen,
- ein in und/oder an der Durchflussstrecke (A) angeordnetes strömungsbeeinflussendes Element (22), welches in einer vorgesehenen Durchflussrichtung des Fluids entlang der Durchflussstrecke (A) vor dem Messbereich (16) angeordnet und von diesem beabstandet ist,
wobei das strömungsbeeinflussende Element (22) einstückig mit dem ersten Anschluss (12) oder dem zweiten Anschluss (14) ausgebildet ist, und
wobei das strömungsbeeinflussende Element (22) derart ausgebildet ist, dass das über den ersten Anschluss (12) in die Vorrichtung (10) einströmende Fluid, welches mit einer im Wesentlichen laminaren Strömung in die Vorrichtung (10) einströmt, im Messbereich (16) eine im Wesentlichen turbulente Strömung aufweist.

2. Vorrichtung (10) nach Anspruch 1, wobei die Durchflussstrecke (A) entlang des ersten Anschlusses (12) zumindest abschnittsweise einen im Wesentlichen kreisförmigen Querschnitt aufweist, und/oder
wobei die Durchflussstrecke (A) entlang des zweiten Anschlusses (14) zumindest abschnittsweise einen im Wesentlichen kreisförmigen Querschnitt aufweist, und/oder
wobei die Durchflussstrecke (A) entlang des Messbereichs (16) zumindest abschnittsweise einen im Wesentlichen rechteckigen, insbesondere quadratischen, Querschnitt oder einen im Wesentlichen hexagonalen Querschnitt aufweist.

3. Vorrichtung (10) nach Anspruch 1 oder 2, wobei die Querschnittsfläche der Durchflussstrecke (A) des strömungsbeeinflussenden Elements (22) etwa 6% bis 20%, bevorzugt etwa 8% bis 15%, insbesondere etwa 8,5 % bis 12 %, geringer ist als die Querschnittsfläche der Durchflussstrecke (A) unmittelbar vor und bevorzugt unmittelbar nach dem strömungsbeeinflussenden Element (22).

4. Vorrichtung (10) nach einem der vorangegangenen Ansprüche, wobei der Messbereich (16) von dem strömungsbeeinflussenden Element (22) in Durchflussrichtung (A) zwischen dem 5 bis 60-fachen des Durchmessers des strömungsbeeinflussenden Elements (22) beabstandet ist.

5. Vorrichtung (10) nach einem der vorangegangenen Ansprüche, wobei das strömungsbeeinflussende Element (22) als Vorsprung ausgebildet ist, der sich von einer die Durchflussstrecke (A) umgebenden Wand (32) in die Durchflussstrecke (A) erstreckt.

6. Vorrichtung (10) nach einem der vorangegangenen Ansprüche, wobei das strömungsbeeinflussende Element (22) als eine im Wesentlichen ringförmige Einschnürung ausgebildet ist, und wobei bevorzugt die Einschnürung strukturiert ist.

7. Vorrichtung (10) nach einem der vorangegangenen Ansprüche, wobei die Querschnittsfläche der Durchflussstrecke (A) vor und nach dem strömungsbeeinflussenden Element (22), insbesondere unmittelbar vor und nach dem strömungsbeeinflussenden Element (22), größer ist als die Querschnittsfläche der Durchflussstrecke im Bereich des strömungsbeeinflussenden Elements (22).

8. Vorrichtung (10) nach einem der vorangegangenen Ansprüche, wobei der erste Anschluss (12) einen Kanal (30) aufweist, der zumindest einen Teil der Durchflussstrecke (A) bildet, wobei an einem ersten Ende des Kanals (30) das Fluid einströmt und an einem zweiten Ende des Kanals (30) der Messbereich (16) angeordnet ist, und
wobei der erste Anschluss (12) das strömungsbeeinflussende Element (22) aufweist.

9. Vorrichtung (10) nach Anspruch 8, wobei der Kanal (30) zumindest abschnittsweise einen im Wesentlichen kreisförmigen Querschnitt aufweist, wobei sich der Querschnitt ausgehend von dem ersten Ende des Kanals (30) in Richtung des strömungsbeeinflussenden Elements (22) verjüngt, und wobei sich vorzugsweise der Querschnitt des Kanals (30) ausgehend von dem strömungsbeeinflussenden Element (22) in Richtung des zweiten Endes des Kanals (30) erweitert und/oder
wobei der Kanal (30) des ersten Anschlusses (12) ausgehend von dem ersten Ende des Kanals (30) in Richtung des strömungsbeeinflussenden Elements (22) konisch zulaufend ist und wobei bevorzugt der Kanal (30) des ersten Anschlusses (12) ausgehend von dem zweiten Ende des Kanals (30) in Richtung des strömungsbeeinflussenden Elements (22) konisch zulaufend ist.

10. Vorrichtung (10) nach einem der vorangegangenen Ansprüche, wobei der erste Anschluss (12) und/oder der zweite Anschluss (14) derart ausgebildet sind, dass die fluidführende Leitung selbstsichernd an dem ersten Anschluss (12) und/oder dem zweiten Anschluss (14) angeordnet werden kann, wobei der erste Anschluss (12) und/oder der zweite Anschluss (14) insbesondere als Schlaucholive (36) ausgebildet sind.

11. Vorrichtung (10) nach einem der vorangegangenen Ansprüche, wobei der Messbereich (16) mindestens zwei Kontaktflächen (20) aufweist, welche sich zumindest abschnittsweise entlang der Durchflussstrecke (A) erstrecken, wobei die Kontaktflächen (20) mit der Durchflussmesseinrichtung koppelbar sind.

12. Vorrichtung (10) nach einem der vorangegangenen Ansprüche, wobei der erste Anschluss (12) lösbar mit dem Messbereich (16) verbindbar ist, und/oder wobei der zweite Anschluss (14) lösbar mit dem Messbereich (16) verbindbar ist.

13. Vorrichtung (10) nach einem der vorangegangenen Ansprüche, wobei der erste Anschluss (12) und/oder der zweite Anschluss (14) jeweils mit einem Sicherungselement (18) an dem Messbereich (16) sicherbar sind.

14. Verfahren zur Erfassung einer Messgröße des von einer Leitung geführten Fluids, aufweisend:
Anordnen einer Vorrichtung (10) nach einem der Ansprüche 1 bis 13 an einer fluidführenden Leitung,
Anordnen einer Durchflussmesseinrichtung (21) an dem Messbereich (16),
Durchströmen der Durchflussstrecke (A) mit dem Fluid, und
Durchführen der Durchflussmessung.

15. Verwendung einer Vorrichtung (10) nach einem der vorangegangenen Ansprüche 1 bis 13 zur Durchflussmessung eines Fluids.

## Claims

1. Device (10) for arranging on a fluid-conducting line and for attaching a flowmeter (21), in particular an ultrasonic flowmeter, for detecting a measurement variable of the fluid conducted by the line, the device (10) comprising:
- a first and a second connector (12, 14), by means of which the device (10) can be connected to the fluid-conducting line,
- a measurement region (16) arranged between the first connector (12) and the second connector (14), which measurement region can be coupled to the flowmeter for detecting the measurement variable, wherein the first connector (12), the measurement region (16) and the second connector (14) define a flow path (A) for the fluid through the device (10),
- a flow-influencing element (22) arranged in and/or on the flow path (A), which flow-influencing element, in an intended direction of flow of the fluid along the flow path (A), is arranged upstream of the measurement region (16) and is spaced apart therefrom,
wherein the flow-influencing element (22) is formed in one piece with the first connector (12) or the second connector (14), and
wherein the flow-influencing element (22) is designed in such a way that the fluid flowing into the device (10) via the first connector (12), which flows into the device (10) with a substantially laminar flow, has a substantially turbulent flow in the measurement region (16).

2. Device (10) according to claim 1, wherein the flow path (A) along the first connector (12) has at least in part a substantially circular cross-section, and/or
wherein the flow path (A) along the second connector (14) has at least in part a substantially circular cross-section, and/or
wherein the flow path (A) along the measurement region (16) has at least in part a substantially quadrangular, in particular square, cross-section or a substantially hexagonal cross-section.

3. Device (10) according to claim 1 or 2, wherein the cross-sectional area of the flow path (A) of the flow-influencing element (22) is around 6% to 20%, preferably around 8% to 15%, in particular around 8.5% to 12%, smaller than the cross-sectional area of the flow path (A) immediately upstream and preferably immediately downstream of the flow-influencing element (22).

4. Device (10) according to any one of the preceding claims, wherein the measurement region (16) is spaced apart from the flow-influencing element (22) in the direction of flow (A) by between 5 to 60 times the diameter of the flow-influencing element (22).

5. Device (10) according to any one of the preceding claims, wherein the flow-influencing element (22) is designed as a projection which extends into the flow path (A) from a wall (32) surrounding the flow path (A).

6. Device (10) according to any one of the preceding claims, wherein the flow-influencing element (22) is designed as a substantially annular constriction, and wherein preferably the constriction is structured.

7. Device (10) according to any one of the preceding claims, wherein the cross-sectional area of the flow path (A) upstream and downstream of the flow-influencing element (22), in particular immediately upstream and downstream of the flow-influencing element (22), is larger than the cross-sectional area of the flow path in the region of the flow-influencing element (22).

8. Device (10) according to any one of the preceding claims, wherein the first connector (12) has a channel (30) which forms at least a portion of the flow path (A), wherein the fluid flows in at a first end of the channel (30) and the measurement region (16) is arranged at a second end of the channel (30), and
wherein the first connector (12) comprises the flow-influencing element (22).

9. Device (10) according to claim **8,** wherein the channel (30) has at least in part a substantially circular cross-section, wherein the cross-section narrows from the first end of the channel (30) toward the flow-influencing element (22), and wherein preferably the cross-section of the channel (30) widens from the flow-influencing element (22) toward the second end of the channel (30), and/or
wherein the channel (30) of the first connector (12) tapers conically from the first end of the channel (30) toward the flow-influencing element (22), and wherein preferably the channel (30) of the first connector (12) tapers conically from the second end of the channel (30) toward the flow-influencing element (22).

10. Device (10) according to any one of the preceding claims, wherein the first connector (12) and/or the second connector (14) are designed in such a way that the fluid-conducting line can be arranged in a self-securing manner on the first connector (12) and/or the second connector (14), wherein the first connector (12) and/or the second connector (14) are in particular designed as a barbed fitting (36).

11. Device (10) according to any one of the preceding claims, wherein the measurement region (16) has at least two contact surfaces (20) which extend along at least part of the flow path (A), wherein the contact surfaces (20) can be coupled to the flowmeter.

12. Device (10) according to any one of the preceding claims, wherein the first connector (12) can be detachably connected to the measurement region (16), and/or wherein the second connector (14) can be detachably connected to the measurement region (16).

13. Device (10) according to any one of the preceding claims, wherein the first connector (12) and/or the second connector (14) can each be secured to the measurement region (16) by a securing element (18).

14. Method for detecting a measurement variable of the fluid conducted by a line, which method comprises:
arranging a device (10) according to any one of claims 1 to 13 on a fluid-conducting line,
arranging a flowmeter (21) on the measurement region (16),
causing the fluid to flow through the flow path (A), and
carrying out the flow measurement.

15. Use of a device (10) according to any one of the preceding claims 1 to 13 for measuring the flow of a fluid.

## Revendications

1. Dispositif (10) à disposer sur une conduite de guidage de fluide et pour le montage d'un système de mesure de débit (21), en particulier d'un système de mesure de débit à ultrasons, pour l'acquisition d'une grandeur de mesure du fluide guidé par la conduite, dans lequel le dispositif (10) présente :
- un premier et un deuxième raccord (12, 14), au moyen desquels le dispositif (10) peut être relié à la conduite de guidage de fluide,
- une zone de mesure (16) disposée entre le premier raccord (12) et le deuxième raccord (14), qui peut être couplée au système de mesure de débit pour acquérir la grandeur de mesure, dans lequel le premier raccord (12), la zone de mesure (16) et le deuxième raccord (14) définissent un trajet d'écoulement (A) pour le fluide à travers le dispositif (10),
- un élément influençant l'écoulement (22) disposé dans et/ou sur le trajet **d'écoulement** (A), lequel est disposé dans une direction d'écoulement prévue du fluide le long du trajet d'écoulement (A) avant la zone de mesure (16) et est espacé de celle-ci,
dans lequel l'élément influençant l'écoulement (22) est réalisé **d'une** seule pièce avec le premier raccord (12) ou le deuxième raccord (14), et
dans lequel l'élément influençant l'écoulement (22) est réalisé de telle sorte que le fluide affluant dans le dispositif (10) par l'intermédiaire du premier raccord (12), lequel afflue avec un écoulement sensiblement laminaire dans le dispositif (10), présente dans la zone de mesure (16) un écoulement sensiblement turbulent.

2. Dispositif (10) selon la revendication 1, dans lequel le trajet d'écoulement (A) présente le long du premier raccord (12) au moins sur certaines parties une section transversale sensiblement circulaire, et/ou
dans lequel le trajet d'écoulement (A) présente le long du deuxième raccord (14) au moins sur certaines parties une section transversale sensiblement circulaire, et/ou
dans lequel le trajet d'écoulement (A) présente le long de la zone de mesure (16) au moins sur certaines parties une section transversale sensiblement rectangulaire, en particulier carrée, ou une section transversale sensiblement hexagonale.

3. Dispositif (10) selon la revendication 1 ou 2, dans lequel la surface de section transversale du trajet d'écoulement (A) de l'élément influençant l'écoulement (22) est inférieure **d'environ** 6 % à 20 %, de préférence **d'environ** 8 % à 15 %, en particulier **d'environ** 8,5 % à 12 %, à la surface de section transversale du trajet d'écoulement (A) immédiatement avant et de préférence immédiatement après l'élément influençant l'écoulement (22).

4. Dispositif (10) selon l'une quelconque des revendications précédentes, dans lequel la zone de mesure (16) est espacée de l'élément influençant l'écoulement (22) dans la direction d'écoulement (A) d'entre 5 à 60 fois le diamètre de l'élément influençant l'écoulement (22).

5. Dispositif (10) selon l'une quelconque des revendications précédentes, dans lequel l'élément influençant l'écoulement (22) est réalisé sous la forme d'une saillie, qui s'étend d'une paroi (32) entourant le trajet d'écoulement (A) dans le trajet d'écoulement (A).

6. Dispositif (10) selon l'une quelconque des revendications précédentes, dans lequel l'élément influençant l'écoulement (22) est réalisé sous la forme d'un rétrécissement sensiblement annulaire, et dans lequel de préférence le rétrécissement est structuré.

7. Dispositif (10) selon l'une quelconque des revendications précédentes, dans lequel la surface de section transversale du trajet d'écoulement (A) avant et après l'élément influençant l'écoulement (22), en particulier immédiatement avant et après l'élément influençant l'écoulement (22), est supérieure à la surface de section transversale du trajet d'écoulement dans la zone de l'élément influençant l'écoulement (22).

8. Dispositif (10) selon l'une quelconque des revendications précédentes, dans lequel le premier raccord (12) présente un canal (30) qui forme au moins une partie du trajet d'écoulement (A), dans lequel le fluide afflue sur une première extrémité du canal (30) et la zone de mesure (16) est disposée sur une deuxième extrémité du canal (30), et
dans lequel le premier raccord (12) présente l'élément influençant l'écoulement (22).

9. Dispositif (10) selon la revendication 8, dans lequel le canal (30) présente au moins sur certaines parties une section transversale sensiblement circulaire, dans lequel la section transversale s'amincit à partir de la première extrémité du canal (30) en direction de l'élément influençant l'écoulement (22), et dans lequel de préférence la section transversale du canal (30) s'élargit à partir de l'élément influençant l'écoulement (22) en direction de la deuxième extrémité du canal (30) et/ou
dans lequel le canal (30) du premier raccord (12) s'effile de manière conique à partir de la première extrémité du canal (30) en direction de l'élément influençant l'écoulement (22) et dans lequel de préférence le canal (30) du premier raccord (12) s'effile de manière conique à partir de la deuxième extrémité du canal (30) en direction de l'élément influençant l'écoulement (22).

10. Dispositif (10) selon l'une quelconque des revendications précédentes, dans lequel le premier raccord (12) et/ou le deuxième raccord (14) sont formés de telle sorte que la conduite conduisant le fluide peut être disposée de manière autobloquante sur le premier raccord (12) et/ou le deuxième raccord (14), dans lequel le premier raccord (12) et/ou le deuxième raccord (14) sont réalisés en particulier sous la forme d'olive pour tuyau (36).

11. Dispositif (10) selon l'une quelconque des revendications précédentes, dans lequel la zone de mesure (16) présente au moins deux surfaces de contact (20), lesquelles s'étendent au moins sur certaines parties le long du trajet d'écoulement (A), dans lequel les surfaces de contact (20) peuvent être couplées au système de mesure de débit.

12. Dispositif (10) selon l'une quelconque des revendications précédentes, dans lequel le premier raccord (12) peut être relié de manière détachable à la zone de mesure (16), et/ou dans lequel le deuxième raccord (14) peut être relié de manière détachable à la zone de mesure (16).

13. Dispositif (10) selon l'une quelconque des revendications précédentes, dans lequel le premier raccord (12) et/ou le deuxième raccord (14) peuvent être bloqués sur la zone de mesure (16) respectivement avec un élément de blocage (18).

14. Procédé pour acquérir une grandeur de mesure du fluide guidé par une conduite, présentant :
la disposition d'un dispositif (10) selon l'une quelconque des revendications 1 à 13 sur une conduite de guidage de fluide,
la disposition d'un système de mesure de débit (21) sur la zone de mesure (16),
la traversée du trajet d'écoulement (A) avec le fluide, et
la mise en œuvre de la mesure de débit.

15. Utilisation d'un dispositif (10) selon l'une quelconque des revendications précédentes 1 à 13 pour la mesure de débit d'un fluide.
